(19)

Europäisches Patentamt

European Patent Office

Office européen des brevets

(11) **EP 4 773 605 A1**

(12) **EUROPEAN PATENT APPLICATION**

(43) Date of publication:
08.07.2026 Bulletin 2026/28

(21) Application number: 25305012.4

(22) Date of filing: 06.01.2025

(51) International Patent Classification (IPC):
*H04N 19/46* $^{(2014.01)}$   *H04N 19/70* $^{(2014.01)}$
*H04N 19/85* $^{(2014.01)}$

(52) Cooperative Patent Classification (CPC):
**H04N 19/46; H04N 19/70; H04N 19/85**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **DEMARTY, Claire-Helene**
  **35520 MONTREUIL LE GAST (FR)**
• **FRANCOIS, Edouard**
  **35890 BOURG DES COMPTES (FR)**
• **AUMONT, Franck**
  **35770 VERN SUR SEICHE (FR)**
• **LE MEUR, Olivier**
  **35160 TALENSAC (FR)**

(74) Representative: **Interdigital**
**Immeuble ZEN 2**
**845 A, avenue des Champs Blancs**
**35510 Cesson-Sévigné (FR)**

(54) **NEURAL NETWORK POST FILTER FOR TONE MAPPING WITH TARGET COLOUR VOLUME INFORMATION**

(57)    Specific syntax elements define a neural-network post-filter characteristics (NNPFC) supplemental enhancement information (SEI) message carrying information related to a tone mapping operation that can be applied as a post filter to the decoded image. This NNPFC SEI message may comprise information representative of the colour volume resulting from the tone mapping operation and information representative of adaptation parameters, related to the adaptation of the luminance level, quality level and the energy adaptation level that result from the tone mapping operation are provided. The information representative of the colour volume resulting from the tone mapping operation may also be carried using a second SEI message. An encoding method, a decoding method, an encoding apparatus and a decoding apparatus are described.

Figure 9

**Description**

TECHNICAL FIELD

At least one of the present embodiments generally relates to a video encoding and decoding method and device, and more particularly to syntax elements defining a neural network post filter for tone mapping with target colour volume information.

BACKGROUND ART

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors or prediction residuals, are transformed, quantized and entropy coded. During encoding the original image block is usually partitioned/split into sub-blocks for example using quad-tree partitioning. To reconstruct the video, the compressed data is decoded by inverse processes corresponding to the prediction, transform, quantization and entropy coding.

The color volume of a picture represents the set of colors of the picture sample values. It corresponds to the 3D shape containing all color values present in the picture and it may be defined par three vertices called primaries. It can be defined for example in the CIE 1931 xyY color space.

Tone mapping is generally a technique used in image processing and computer graphics to map one set of colours to another to approximate the appearance of high-dynamic-range (HDR) images in a medium that has a more limited dynamic range. Forms of tone mapping long precede digital photography. The manipulation of film and development process to render high contrast scenes, especially those shot in bright sunlight, on printing paper with a relatively low dynamic range, is effectively a form of tone mapping, although it is not usually called that. The normal process of exposure compensation, brightening shadows and altering contrast applied globally to digital images as part of a professional or serious amateur workflow is also a form of tone mapping.

Reducing the energy consumption of electronic devices has become a requirement not only for electronic devices manufacturers but also to limit, as much as possible, the environmental impact and to contribute to the emergence of a sustainable display industry. The increase in display resolution from SD to HD to 4K and soon to 8K and beyond, as well as the introduction of high dynamic range imaging, has brought about a corresponding increase in energy requirements of display devices. This is not consistent with the global need to reduce energy consumption. Indeed, displays are an important source of energy consumption, whether it be for battery-powered devices (e.g., smartphones) or in the global video distribution chain.

Organic Light Emitting Diode (OLED) displays are finding more and more widespread use because of numerous advantages compared to transmissive displays such as Thin-Film Transistor Liquid Crystal Displays (TFT-LCDs). Rather than using a uniform backlight, OLED displays are composed of LEDs as image pixels. OLEDs power consumption is therefore highly correlated to the image content and can be readily estimated by considering the luminance level of the displayed image pixels. Although OLED displays consume energy in a controllable manner, they are still the most important source of energy consumption in a video transmission chain.

It is therefore interesting to consider energy-aware images, i.e., those that will need less energy when displayed on CE displays, for example using OLED displays. Energy-aware transformations applied to contents involve luma and colour manipulation of the content to create a new content that will consume less energy when displayed.

SUMMARY

According to an aspect of at least one embodiment, a method comprises obtaining an encoded picture, obtaining a color volume corresponding to a result of a tone mapping operation for the encoded picture, inserting information representative of the colour volume and tone mapping operation in a neural-network post-filter characteristics supplemental enhancement information message, generating video data comprising the encoded picture and the neural-network post-filter characteristics supplemental enhancement information message, and providing the video data.

According to an aspect of at least one embodiment, a method comprises obtaining an encoded picture, obtaining a color volume corresponding to a result of a tone mapping operation for the encoded picture, inserting information representative of the tone mapping operation in a neural-network post-filter characteristics supplemental enhancement information message, inserting information representative of the color volume in a second supplemental enhancement information message designed to carry color volume information, generating video data comprising the encoded picture, the neural-network post-filter characteristics supplemental enhancement information message and the second supplemental enhancement information message, and providing the video data.

According to an aspect of at least one embodiment, a method comprises obtaining, from video data, an encoded picture, and neural-network post-filter characteristics supplemental enhancement information message comprising information representative of a colour volume corresponding to a result of a tone mapping operation for the encoded picture and information indicative of a tone mapping operation, decoding the encoded picture to obtain a decoded picture, applying a neural-network post-filter tone mapping operation to the decoded picture based on the color volume, and providing the tone-mapped picture.

According to an aspect of at least one embodiment, a method comprises obtaining, from video data, an encoded picture, a neural-network post-filter characteristics supplemental enhancement information message comprising information indicative of a tone mapping operation and a second supplemental enhancement information message comprising information representative of a colour volume corresponding to a result of the tone mapping operation for the encoded picture, decoding the encoded picture to obtain a decoded picture, applying a neural-network post-filter tone mapping operation to the decoded picture based on the color volume and providing the tone-mapped picture.

According to an aspect of at least one embodiment, an apparatus comprises one or more processors configured to obtain, from video data, an encoded picture, and neural-network post-filter characteristics supplemental enhancement information message comprising information representative of a colour volume corresponding to a result of a tone mapping operation for the encoded picture and information indicative of a tone mapping operation, decode the encoded picture to obtain a decoded picture, apply a neural-network post-filter tone mapping operation to the decoded picture based on the color volume and provide the tone-mapped picture.

According to an aspect of at least one embodiment, an apparatus comprises one or more processors configured to obtain, from video data, an encoded picture, a neural-network post-filter characteristics supplemental enhancement information message comprising information indicative of a tone mapping operation and a second supplemental enhancement information message comprising information representative of a colour volume corresponding to a result of the tone mapping operation for the encoded picture, decode the encoded picture to obtain a decoded picture, apply a neural-network post-filter tone mapping operation to the decoded picture based on the color volume, and provide the tone-mapped picture.

One or more of the present embodiments also provide a computer readable storage medium having stored thereon instructions according to at least part of any of the methods described above. One or more embodiments also provide a computer readable storage medium having stored thereon a bitstream generated according to the encoding methods described above. One or more embodiments also provide a computer program product including instructions for performing at least part of any of the methods described above.

BRIEF SUMMARY OF THE DRAWINGS

Figure 1 illustrates a block diagram of an example of a system in which various aspects and embodiments are implemented.

Figure 2 describes an example of a context in which following embodiments can be implemented.

Figure 3 illustrates a block diagram of an example of video encoder.

Figure 4 illustrates a block diagram of an example of video decoder.

Figure 5 illustrates an example of partitioning undergone by an image of an original video sequence.

Figure 6 illustrates different color volumes according to embodiments.

Figure 7A illustrates an overview of the syntax elements according to embodiments where target colour volume information is inserted in a NNPFC SEI message.

Figure 7B illustrates an overview of the syntax elements according to embodiments where target colour volume information is carried by an external color volume metadata structure.

Figure 7C illustrates an overview of the syntax elements according to embodiments where target colour volume information and the original colour volume information are inserted in a NNPFC SEI message.

Figure 7D illustrates an overview of the syntax elements according to embodiments where target colour volume information is carried by an external color volume metadata structure and original colour volume information is inserted in a NNPFC SEI message.

Figure 7E illustrates an overview of the syntax elements according to embodiments where target colour volume information is inserted in a NNPFC SEI message and original colour volume information is carried by an external color volume metadata structure.

Figure 7F illustrates an overview of the syntax elements according to embodiments where both the target colour volume information and the original colour volume information are carried by external color volume metadata structures.

Figure 8 illustrates an example process for encoding video data comprising an NNPFC SEI message with Tone Mapping purpose and target color volume information according to embodiments.

Figure 9 illustrates an example process for decoding video data comprising an NNPFC SEI message with Tone Mapping purpose and target color volume information according to embodiments.

DETAILED DESCRIPTION

Embodiments described herein relate to tone mapping operations performed by a neural network post filter of a video (or picture) decoder that transforms and adapts colours of a picture to another set of colours. Such a tone mapping may respond to different specific purposes such as energy control through luminance reduction. Energy control corresponds, for example, to decreasing the energy consumption of the device that displays the decoded picture, thus providing an 'eco' mode by reducing the luminance or brightness or color of the decoded picture before displaying it.

At least one embodiment defines syntax elements of a neural-network post-filter characteristics (NNPFC) supplemental enhancement information (SEI) message that carries information related to a tone mapping operation that can be applied as a post filter to the decoded image. Such NNPFC SEI message may comprise information representative of the colour volume resulting from the tone mapping operation and information representative of adaptation parameters, related to the adaptation of the luminance level, quality level, brightness level and the energy adaptation level that result from the tone mapping operation are provided.

The present aspects, although describing principles in the context of VVC (Versatile Video Coding) or HEVC (High Efficiency Video Coding) specifications, are not limited to these video coding standards, and can be applied, for example, to other standards and recommendations and extensions of any such standards and recommendations (including VVC and HEVC). Unless indicated otherwise, or technically precluded, the aspects described in this application can be used individually or in combination.

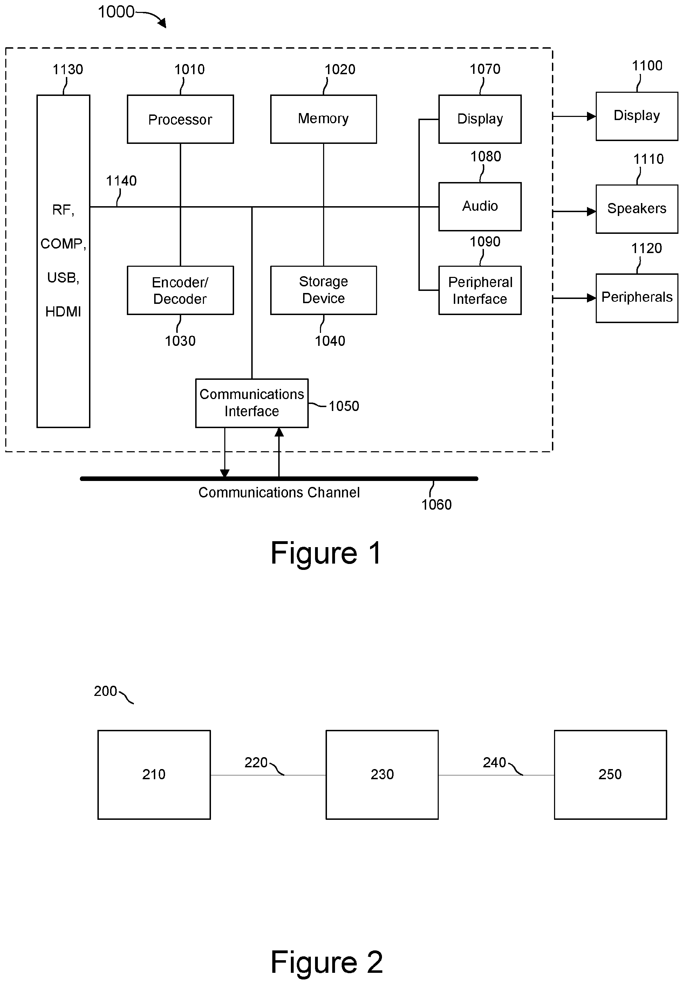

**Figure 1** illustrates a block diagram of an example of a system in which various aspects and embodiments are implemented. System 1000 can be embodied as a device or apparatus including the various components described below and is configured to perform one or more of the aspects described in this document. Examples of such devices include, but are not limited to, various electronic devices such as computers, smartphones, tablets, digital multimedia set top boxes, digital television receivers, personal video recording systems, connected home appliances, vehicle entertainment systems, vehicle control systems, drones, video surveillance cameras, and more generally data servers. Elements of system 1000, singly or in combination, can be embodied in a single integrated circuit (IC), multiple Ics, and/or discrete components. For example, in at least one embodiment, the processing and encoder/decoder elements of system 1000 are distributed across multiple Ics and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or anon-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash-based memory, magnetic disk drive, solid-state drive (SSD), and/or optical disk drive. The storage device 1040 can include an internal storage device, an attached storage device (including detachable and non-detachable storage devices), and/or a network accessible storage device (a.k.a. cloud storage), as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions described further below. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform one or more of the aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items when performing the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or anon-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265), or VVC (Versatile Video Coding, also known as H.266).

The input to the elements of system 1000 can be provided through various input devices as indicated in block 1130. Such input devices include, but are not limited to, a radio frequency (RF) portion that receives an RF signal transmitted, for example, over the air by a broadcaster, a Component (COMP) input terminal (or a set of COMP input terminals), a Universal Serial Bus (USB) input terminal, and/or a High-Definition Multimedia Interface (HDMI) input terminal. Other examples include composite video.

In various embodiments, the input devices of block 1130 have associated respective input processing elements as known in the art. For example, the RF portion can be associated with elements suitable for selecting a desired frequency (also referred to as selecting a signal, or band-limiting a signal to a band of frequencies), down converting the selected signal, band-limiting again to a narrower band of frequencies to select (for example) a signal frequency band which can be referred to as a channel in certain embodiments, demodulating the down converted and band-limited signal, performing error correction, and demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna. The RF portion may comply with standard specifications such as those published by Digital Video Broadcasting (DVB), Advanced Television Systems Committee (ATSC), Association of Radio Industries and Businesses (ARIB) or others.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface Ics or within processor 1010 as necessary. The demodulated, error corrected, and demultiplexed stream is provided to various processing elements, including, for example, processor 1010, and encoder/decoder 1030 operating in combination with the memory and storage elements to process the data stream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

**Figure 2** describes an example of a context in which following embodiments can be implemented. In this context 200, a system 210 transmits a video stream to a system 230 using a communication channel 220. Examples of system 210 comprise a camera, a storage device, a computer, a drone, a video surveillance camera, a server or any device capable of delivering a video stream. The video stream is either encoded and transmitted by the system 210 or received and/or stored by the system 210 and then transmitted. The communication channel 220 is a wired (for example Internet, Ethernet, Cable network) or a wireless (for example WiFi, 3G, 4G or 5G, satellite TV, terrestrial TV) network link. The system 230 receives and decodes the video stream to generate a sequence of decoded pictures. An example of system 230 is a set top box. The obtained sequence of decoded pictures is then transmitted to a display system 250 using a communication channel 240, that could be a wired or wireless network as introduced above. The display system 250 then displays said pictures. An example of display system 250 is a television or display monitor.

In an embodiment, the system 230 and the display system 250 are comprised in a single device, thus combining the reception, decoding and display of the video stream. Examples of such device are a television, a computer, a tablet, a smartphone, a head-mounted display, a vehicle entertainment system, a medical device.

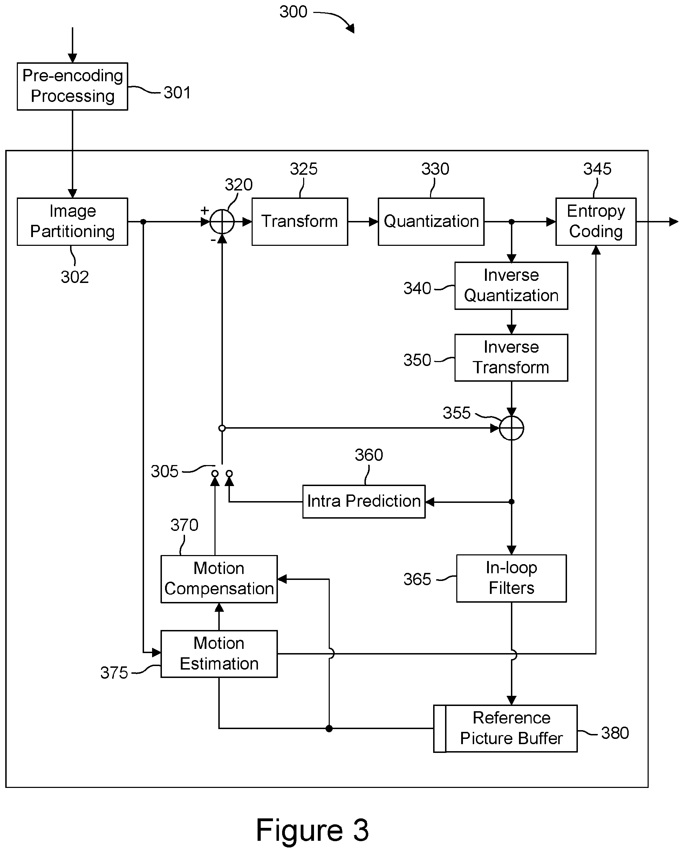

**Figure 3** illustrates a block diagram of an example of video encoder. Variations of this encoder 300 are contemplated, but the encoder 300 is described below for purposes of clarity without describing all expected variations.

Before being encoded, the video sequence may go through pre-encoding processing 301, for example, applying a color transform to the input color picture (e.g., conversion from RGB 4:4:4 to YcbCr 4:2:0), or performing a remapping of the input picture components in order to get a signal distribution more resilient to compression (for instance using a histogram equalization of one of the color components). Metadata can be associated with the pre-processing and attached to the bitstream, for example in the form of supplemental enhancement information (SEI) messages, for the standards that include such mechanism.

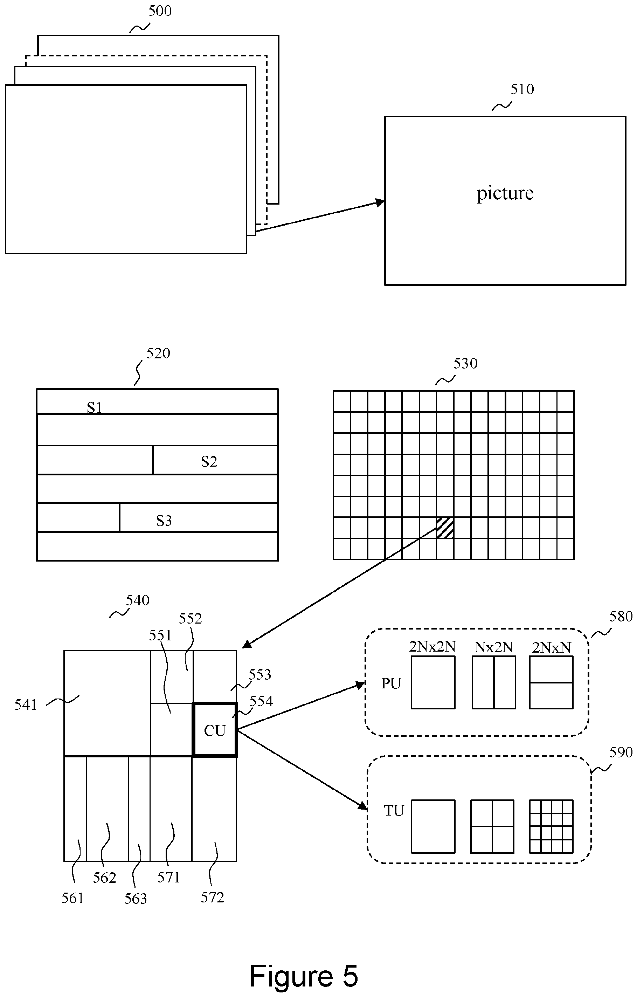

In the encoder, a picture is encoded by the encoder elements as described below. The picture to be encoded is partitioned (302), for example as further described in figure 5, and processed in units such as coding units. Each unit is encoded using, for example, either an intra or inter mode. When a unit is encoded in an intra mode, it performs intra prediction (360). In an inter mode, motion estimation (375) and compensation (370) are performed. The encoder decides (305) which one of the intra mode or inter mode to use for encoding the unit, and indicates the intra/inter decision by, for example, a prediction mode flag. Prediction residuals are calculated, for example, by subtracting (320) the predicted block from the original image block. The prediction residuals are then transformed (325) and quantized (330). The quantized transform coefficients, as well as motion vectors and other syntax elements, are entropy coded (345) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (340) and inverse transformed (350) to decode prediction residuals. Combining (355) the decoded prediction residuals and the predicted block, an image block is reconstructed. In-loop filters (365) are applied to the reconstructed picture to perform, for example, deblocking/SAO (Sample Adaptive Offset), Adaptive Loop-Filter (ALF) filtering to reduce encoding artifacts. The filtered image is stored at a reference picture buffer (380) for further use.

The encoder also generally performs video decoding as part of encoding video data.

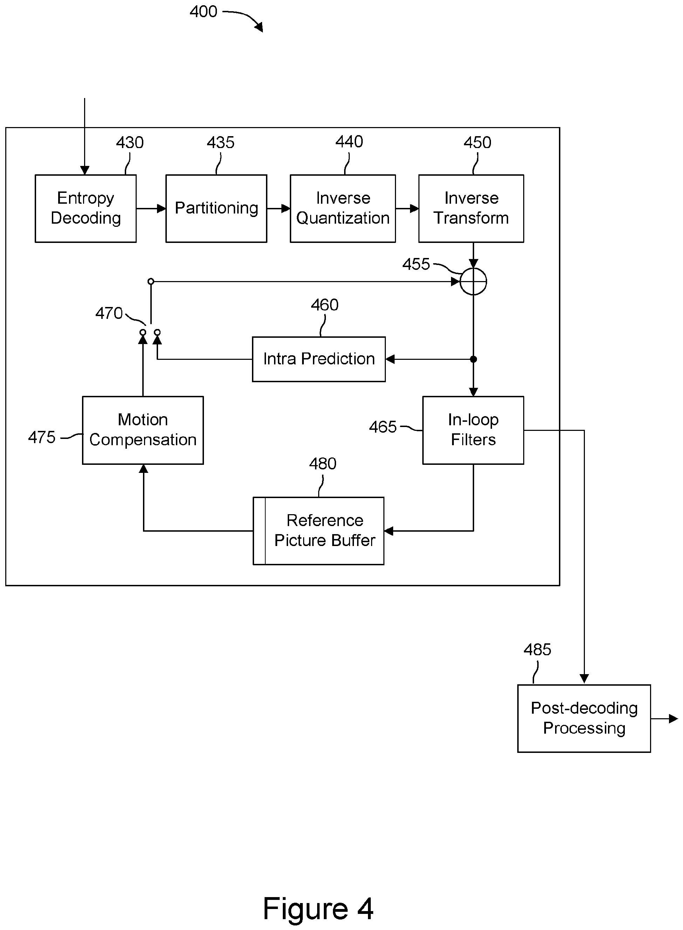

**Figure 4** illustrates a block diagram of an example of video decoder. In the decoder 400, a bitstream is decoded by the decoder elements as described below. Video decoder 400 generally performs a decoding pass reciprocal to the encoding pass as described in previous figure. The input of the decoder includes a video bitstream, which can be generated by video encoder 300 of figure 3. The bitstream is first entropy decoded (430) to obtain transform coefficients, motion vectors, and other coded information. The picture partition information indicates how the picture is partitioned. The decoder may therefore divide (435) the picture according to the decoded picture partitioning information. The transform coefficients are de-quantized (440) and inverse transformed (450) to decode the prediction residuals. Combining (455) the decoded prediction residuals and the predicted block, an image block is reconstructed. The predicted block can be obtained (470) from intra prediction (460) or motion-compensated prediction (i.e., inter prediction) (475). In-loop filters (465) are applied to the reconstructed image. The filtered image is stored at a reference picture buffer (480).

The decoded picture can further go through post-decoding processing (485), for example, an inverse color transform (e.g., conversion from YCbCr 4:2:0 to RGB 4:4:4) or an inverse remapping performing the inverse of the remapping process performed in the pre-encoding processing (301 of figure 3). The post-decoding processing can use metadata derived in the pre-encoding processing and signaled in the bitstream. The post-processing may also comprise neural network post-processing filters designed for different purposes, as described below.

**Figure 5** illustrates an example of partitioning undergone by an image of an original video sequence. An original video sequence 500 comprises a plurality of pictures 510. A picture comprises a plurality of pixels, generally arranged in a grid comprising rows and columns. It is considered in this document that a pixel is composed of three components: a luminance component and two chrominance components. Other types of pixels are however possible comprising less or more components such as only a luminance component or an additional depth component or an additional transparency component.

A picture is divided into a plurality of coding entities. First, as represented by reference 530, a picture is divided in a grid of blocks called coding tree units (CTU). A CTU consists of a block of luminance samples together with two corresponding blocks of chrominance samples. The size of such block is generally $N{\times}N$, and N is generally a power of two having a maximum value of "128" for example. Second, a picture is divided into one or more groups of CTU. For example, it can be divided into one or more tile rows and tile columns, a tile being a sequence of CTU covering a rectangular region of a picture. In some cases, a tile could be divided into one or more bricks, each of which consisting of at least one row of CTU within the tile. Above the concept of tiles and bricks, another encoding entity, called slice, exists, that can contain at least one tile of a picture or at least one brick of a tile. In the example represented by reference 520, the picture 510 is divided into three slices S1, S2 and S3 of the raster-scan slice mode, each comprising a plurality of tiles (not represented), each tile comprising only one brick.

As represented by reference 540, a CTU may be partitioned into the form of a hierarchical tree of one or more sub-blocks called coding units (CU). The CTU is the root (i.e., the parent node) of the hierarchical tree and can be partitioned in a plurality of CU (i.e., child nodes). Each CU becomes a leaf of the hierarchical tree if it is not further partitioned in smaller CU or becomes a parent node of smaller CU (i.e., child nodes) if it is further partitioned. During the coding of a picture, the partitioning is adaptive, each CTU being partitioned to Optimize a compression efficiency.

For example, the CTU 540 is first partitioned in four square CU using a quadtree type partitioning. The upper left CU 541 is a leaf of the hierarchical tree since it is not further partitioned, i.e., it is not a parent node of any other CU. The upper right CU is further partitioned in four smaller square CU 551, 552, 553, 554 using again a quadtree type partitioning. The bottom left CU is vertically partitioned in three rectangular CU 561, 562, 563 using a ternary tree type partitioning. The bottom right CU is vertically partitioned in two rectangular CU 571, 572 using a binary tree type partitioning.

In HEVC appeared the concept of prediction unit (PU) and transform unit (TU). Indeed, in HEVC, the coding entity that is used for prediction (i.e., a PU) and transform (i.e., a TU) can be a subdivision of a CU. For example, as represented in the figure, a CU of size $2N \times 2N$, can be divided in PU 580 of size $N \times 2N$ or of size $2N \times N$. In addition, said CU can be divided in four TU 590 of size $N \times N$ or in "16" TU of size $(N/2) \times (N/2)$. Other video coding standards also use these notions. In VVC, except in some particular cases, frontiers of the TU and PU are aligned on the frontiers of the CU. Consequently, a CU comprises generally one TU and one PU.

In the present application, the terms "reconstructed" and "decoded" may be used interchangeably, the terms "pixel" and "sample" may be used interchangeably, the terms "image," "picture", "sub-picture", "slice" and "frame" may be used interchangeably. Usually, but not necessarily, the term "reconstructed" is used at the encoder side while "decoded" is used at the decoder side. In the present application, the term "block" or "picture block" can be used to refer to any one of a CTU, a CU, a PU and a TU. In addition, the term "block" or "picture block" can be used to refer to a macroblock, a partition and a sub-block as specified in H.264/AVC or in other video coding standards, and more generally to refer to an array of samples of numerous sizes.

Video coding standards like AVC, HEVC and VVC enable embedding of metadata in video bitstreams through Supplemental Enhancement information (SEI) messages. Those messages are defined either in the core standard or companion standard like Versatile Supplemental Enhancement Information(VSEI), and more get added in successive versions of these standards.

A SEI message is a syntax structure that is defined in various MPEG standards to allow carriage of metadata. It is a specific type of Network Access Layer (NAL) unit, which is the elementary packet in MPEG bitstream formats. The SEI syntax may vary slightly across different standards, but it commonly contains at least a payload type, a payload length, and the payload itself. The SEI syntax defined for VVC is illustrated in Table 1 as an example.

Table 1

| sei_message( ) { | Descriptor |
|---|---|
| payloadType = 0 | |
| do { | |
| payload_type_byte | u(8) |
| payloadType += payload_type_byte | |
| } while( payload_type_byte = = 0xFF ) | |
| payloadSize = 0 | |
| do { | |
| payload_size_byte | u(8) |
| payloadSize += payload_size_byte | |
| } while( payload_size_byte = = 0xFF ) | |
| sei_payload( payloadType, payloadSize ) | |
| } | |

In addition, a specific syntax structure is typically defined for each payload type and instantiated by a sei_payload syntax structure according to each payload type. For example, a specific SEI message related to Neural-Network Post-Filter Characteristics (NNPFC-SEI) specifies that a neural network may be used as a post-processing filter (hereafter abbreviated as NNPF) and provides some parameters of such neural network, therefore allowing an encoder to define a neural network for performing a post-processing operation after the decoding operation. The syntax of such NNPFC-SEI message, as disclosed in ISO/IEC DIS 23002-7, is illustrated in Table 2.

Table 2

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc_mode_idc | ue(v) |
| if( nnpfc_mode_idc = = 1) { | |
| while( !byte_aligned( ) ) | |
| nnpfc_alignment_zero_bit_a | u(1) |
| nnpfc_tag_uri | st(v) |
| nnpfc_uri | st(v) |
| } | |
| nnpfc_property_present flag | u(1) |
| if( nnpfc_property_present_flag) { | |
| /* input and output formatting */ | |
| nnpfc_num_input_pics_minus1 | ue(v) |
| if( nnpfc_num_input_pics_minus1 > 0 ) { | |
| for( i = 0; i <= nnpfc_num_input_pics_minus1; i++ ) | |
| nnpfc_input_pic_filtering_flag[ i ] | u(1) |
| nnpfc_absent_input_pic_zero_flag | u(1) |
| } | |
| if( ChromaUpsamplingFlag ) | |
| nnpfc_out_sub_c_flag | u(1) |
| if( ColourizationFlag) | |
| nnpfc_out_colour_format_idc | u(2) |
| if( ResolutionResamplingFlag) { | |
| nnpfc_pic_width_num_minus1 | ue(v) |
| nnpfc_pic_width_denom_minus1 | ue(v) |
| nnpfc_pic_height_num_minus1 | ue(v) |
| nnpfc_pic_height_denom_minus1 | ue(v) |
| } | |
| if( PictureRateUpsamplingFlag ) | |
| for( i = 0; i < nnpfc_num_input_pics_minus1; i++ ) | |
| nnpfc_interpolated_pics[ i ] | ue(v) |
| if( TemporalExtrapolationFlag ) | |
| nnpfc_extrapolated_pics_minus1 | ue(v) |
| nnpfc_component_last_flag | u(1) |
| nnpfc_inp_format_idc | ue(v) |
| nnpfc_auxiliary_inp_idc | ue(v) |
| nnpfc_inp_order_idc | ue(v) |
| if( nnpfc_inp_format_idc = = 1) { | |

(continued)

| | |
|---|---|
| if( nnpfc_inp_order_idc != 1) | |
| nnpfc_inp_tensor_luma_bitdepth_minus8 | ue(v) |
| if( nnpfc_inp_order_idc > 0 ) | |
| nnpfc_inp_tensor_chroma_bitdepth_minus8 | ue(v) |
| } | |
| nnpfc_out_format_idc | ue(v) |
| nnpfc_out_order_idc | ue(v) |
| if( nnpfc_out_format_idc = = 1) { | |
| if( nnpfc_out_order_idc != 1) | |
| nnpfc_out_tensor_luma_bitdepth_minus8 | ue(v) |
| if( nnpfc_out_order_idc != 0 ) | |
| nnpfc_out_tensor_chroma_bitdepth_minus8 | ue(v) |
| } | |
| nnpfc_separate_colour_description_present_flag | u(1) |
| if( nnpfc_separate_colour_description_present_flag ) { | |
| nnpfc_colour_primaries | u(8) |
| nnpfc_transfer_characteristics | u(8) |
| if( nnpfc_out_format_idc = = 1) { | |
| nnpfc_matrix_coeffs | u(8) |
| nnpfc_full_range_flag | u(1) |
| } | |
| } | |
| if( nnpfc_out_order_idc > 0 ) | |
| nnpfc_chroma_loc_info_present_flag | u(1) |
| if( nnpfc_chroma_loc_info_present_flag ) | |
| nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
| nnpfc_patch_width_minus1 | ue(v) |
| nnpfc_patch_height_minus1 | ue(v) |
| } else { | |
| nnpfc_extended_patch_width_cd_delta_minus1 | ue(v) |
| nnpfc_extended_patch_height_cd_delta_minus1 | ue(v) |
| } | |
| nnpfc_padding_type | ue(v) |
| if( nnpfc_padding_type = = 4) { | |
| if( nnpfc_inp_order_idc != 1) | |
| nnpfc luma_padding val | ue(v) |
| if( nnpfc_inp_order_idc != 0 ) { | |

(continued)

| | |
|---|---|
| nnpfc_cb_padding_val | ue(v) |
| nnpfc_cr_padding_val | ue(v) |
| } | |
| } | |
| nnpfc_complexity_info_present_flag | u(1) |
| if( nnpfc_complexity_info_present_flag ) { | |
| nnpfc_parameter_type_idc | u(2) |
| if( nnpfc_parameter_type_idc != 2 ) | |
| nnpfc_log2_parameter_bit_length_minus3 | u(2) |
| nnpfc_num_parameters_idc | u(6) |
| nnpfc_num_kmac_operations_idc | ue(v) |
| nnpfc_total_kilobyte_size | ue(v) |
| } | |
| nnpfc_num_metadata_extension_bits | ue(v) |
| if( nnpfc_num_metadata_extension_bits > 0 ) | |
| nnpfc_reserved_metadata_extension | u(v) |
| } | |
| /* ISO/IEC 15938-17 bitstream */ | |
| if( nnpfc_mode_idc = = 0 ) { | |
| while( !byte_aligned( ) ) | |
| nnpfc alignment zero_bit_b | u(1) |
| for( i = 0; more_data_in_payload( ); i++ ) | |
| nnpfc_payload_byte[ i ] | b(8) |
| } | |
| } | |

A NNPFC-SEI message indicates the intended purpose of the NNPF, specifies the input and output of the neural network and describes its complexity. Up to now, 8 modes have been defined: Enhancing visual quality, Chroma upsampling, Changing spatial resolution (E.g., from high-definition decoded video to ultra-high definition), Upsampling picture rate (E.g., from 30 Hz to 60 Hz), Upsampling bit depth (E.g., to increase the dynamic range of pixel values), Colourization (E.g., to convert monochrome video to full colours), Temporal extrapolation, and Spatial extrapolation.

Embodiments described hereafter have been designed with the foregoing in mind and propose to extend the scope of NNPFC-SEI messages to add a new purpose metadata indicating a tone mapping operation that may be applied as a neural network post filter to the decoded image. Parameters associated to a tone mapping NNPFC-SEI message allow to specify metadata related to the resulting colour volume of the tone mapped content. Optionally, additional metadata indicative of the level of adaptation in terms of luminance, brightness, quality and/or energy that results from the tone mapping operation may also be associated to the NNPFC-SEI message. Tone mapping operations can have different objectives, among which the modification of luminance, brightness or colors of a decoded picture in order to impact the energy consumption required to displaying the tone-mapped picture at the decoder side.

In at least one embodiment, the purpose of the NNPF is extended with a new mode dedicated to tone mapping, and syntax elements representing metadata used to guide the tone mapping process are inserted in the NNPFC SEI message. Table 3 illustrates the set of purposes for the NNPF, the last element being related to the tone mapping operations.

Table 3

| bitMask | Interpretation |
|---------|----------------|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |
| 0x40 | Temporal extrapolation (i.e., generating one or more future pictures) |
| 0x80 | Spatial extrapolation (i.e., generating content outside of the spatial area of the input pictures) |
| 0x100 | Tone mapping (modification of the colour samples values, in terms of contrast, colour, saturation, luminance, etc.). |

The bitMask values proposed in the first column are given as example value and any other bitmask values could be used. The value of nnpfc_purpose may be in the range of 0 to 511, inclusive. Values of 512 to 65 535, inclusive, for nnpfc_purpose may be reserved for future use. The variables ChromaUpsamplingFlag, ResolutionResamplingFlag, PictureRateUpsamplingFlag, BitDepthUpsamplingFlag, ColourizationFlag, TemporalExtrapolationFlag, SpatialExtrapolationFlag, and ToneMappingFlag, specifying whether nnpfc_purpose indicates the purpose of the NNPF to include chroma upsampling, resolution resampling, picture rate upsampling, bit depth upsampling, colourization, temporal extrapolation, and tone mapping respectively, are derived as follows:

$$\text{ChromaUpsamplingFlag} = ( ( \text{nnpfc\_purpose} \ \& \ 0x02 ) > 0 ) ? 1 : 0$$

$$\text{ResolutionResamplingFlag} = ( ( \text{nnpfc\_purpose} \ \& \ 0x04 ) > 0 ) ? 1 : 0$$

$$\text{PictureRateUpsamplingFlag} = ( ( \text{nnpfc\_purpose} \ \& \ 0x08 ) > 0 ) ? 1 : 0$$

$$\text{BitDepthUpsamplingFlag} = ( ( \text{nnpfc\_purpose} \ \& \ 0x10 ) > 0 ) ? 1 : 0$$

$$\text{ColourizationFlag} = ( ( \text{nnpfc\_purpose} \ \& \ 0x20 ) > 0 ) ? 1 : 0$$

$$\text{TemporalExtrapolationFlag} = ( ( \text{nnpfc\_purpose} \ \& \ 0x40 ) > 0 ) ? 1 : 0$$

$$\text{SpatialExtrapolationFlag} = ( ( \text{nnpfc\_purpose} \ \& \ 0x80 ) > 0 ) ? 1 : 0$$

$$\text{ToneMappingFlag} = ( ( \text{nnpfc\_purpose} \ \& \ 0x100 ) > 0 ) ? 1 : 0.$$

As a result of the tone mapping operation, the colour volume (for example named target colour volume) that contains the tone mapped sample values of the modified content is different from the original colour volume. It might be increased (e.g., in the case of some Inverse Tone Mapping operations that may be driven by some QoE purpose, such as SDR->HDR conversion) or decreased (e.g., in the case of Tone Mapping operations, such as HDR->SDR conversion, that may be driven by some energy reduction consideration, e.g., through luminance reduction). In case the colour volume increases, it contains the original colour volume. In case it decreases, it is included in the original colour volume.

In at least one embodiment, a tone mapping operation is signaled as purpose of the NNPF and syntax elements describing a target colour volume for the tone mapped pictures (i.e., the colour volume of the picture samples resulting from the application of the tone mapping NNPF post process to the decoded picture) are carried with the pictures. The target colour volume may be defined by information representative of the colour primaries, a white point, a maximal luminance, a minimal luminance, an average luminance, a maximal content light level, and a maximal picture average light level. Some elements of this information are optional and may be omitted. Different embodiments below propose different methods for carrying such information.

In at least one embodiment, in addition to the target colour volume introduced above, the original colour volume of the sample values is also signaled by specific syntax elements. Indeed, the original colour volume of the sample values before the Tone Mapping operation may be more precise (i.e., smaller or different) than the container colour volume (E.g., standardised colour volumes such as BT.709 or BT.2020). Getting this information may allow the device to decide whether to apply the NNPF or not. It may also help the NNPF to perform a better tone mapping operation.

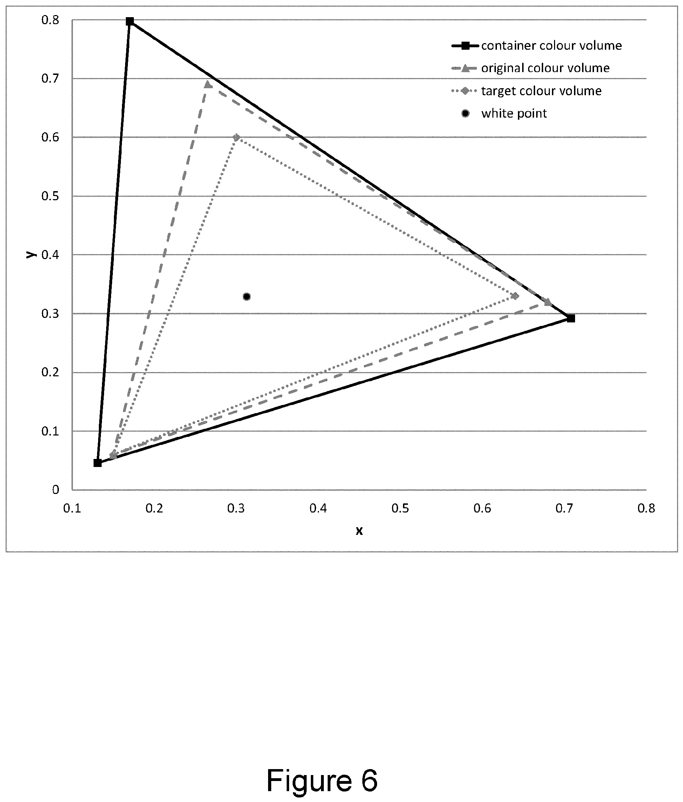

**Figure 6** illustrates different color volumes according to embodiments. The figure shows the colour volume defined in the 2D space defined in the CIE 1931 xy colour space coordinates system. In this figure, the container colour volume may specify the format in which the colour samples of the content are coded (represented) and may be in general standardized, for example as ITU-R BT.709, BT.2020, BT.2100 specifications, in the Video Usability Information (VUI) of the AVC, HEVC or VVC specifications, or in the ITU-T H.273 specification. This ensures interoperability for interpreting the signal coded in those containers. It corresponds for example to the colour volume defined by the output colour primaries defined in the NNPFC SEI message. The original and target colour volume provide more precise indications of the real colour volume occupied by the original and mapped colour samples before and after applying the NNPF than the container colour volume. In this illustration, the original colour volume comprises the target colour volume. In some other use cases, the resulting colour volume might be different from the original colour volume, without implying any inclusion relation. In all cases, as a result of the Tone Mapped operations, the resulting target colour volume might also be different, e.g., more precise, than already standardised colour volumes such as BT.709 or BT.2020. In existing SEI messages describing Tone Mapping operations, such as the SL-HDR information SEI message defined in the ETSI TS 103.433 specification, output colour volumes are described or referred to as container colour volumes, i.e., larger and less precise colour volumes than the proposed target colour volume. Because the resulting target colour volume is different, it necessitates to precisely redefine the colour primaries, white point and luminance ranges. Therefore, the metadata defined in the different embodiments below for the specification of the colour volume convey different information than the already defined nnpfc_colour_primaries in the NNPFC SEI message. Metadata indicative of the target colour volume may be signaled to guide the mapping process. Different variants on the way to signal these metadata are described hereafter.

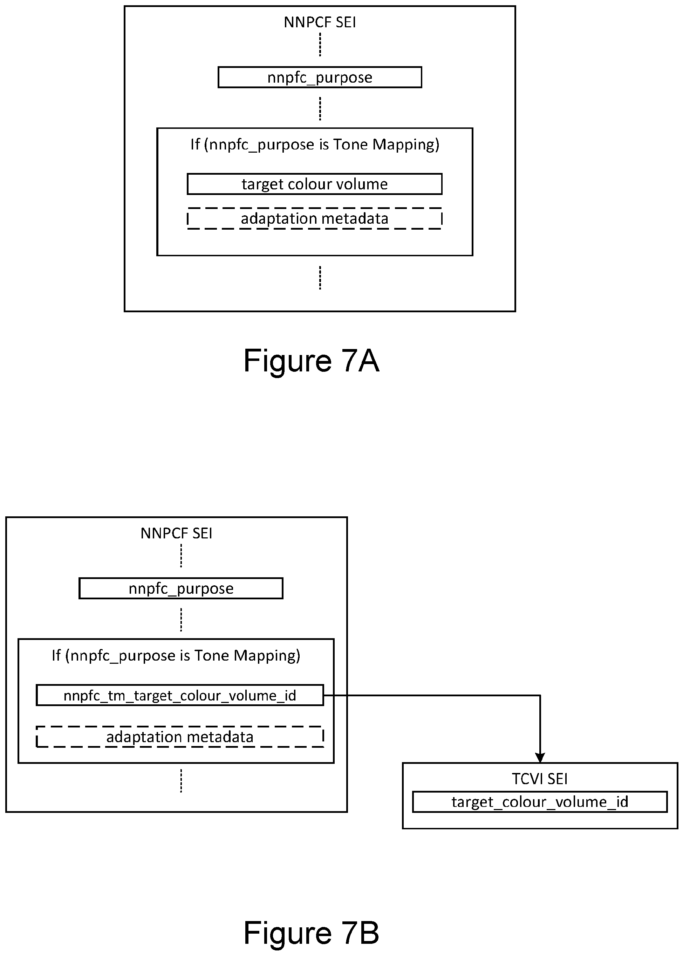

**Figure 7A** illustrates an overview of the syntax elements according to embodiments where target colour volume information is inserted in a NNPFC SEI message. In such embodiment, a tone mapping operation is signaled as purpose of the NNPF (nnpfc_purpose) and syntax elements describing a target colour volume for the tone mapped picture samples are inserted in the NNPFC SEI message. Some adaptation metadata may optionally be inserted also, providing elements indicative of the luminance, energy, brightness and quality variations between the mapped samples and the original ones. These syntax elements are present when the ToneMappingFlag is set.

These syntax elements are added to the syntax of Table 2 as illustrated below in Table 4 where only the new elements (i.e., not previously present in table 2) are represented.

Table 4

| nn_post_filter_characteristics( payloadSize ) { | Descriptor |
|---|---|
| ... | |
|    if(ToneMappingFlag) { | |
|       nnpfc_tm_cv_primaries_present_flag | u(1) |
|       if( nnpfc_tm_cv_primaries_present_flag){ | |
|         for( c=0; c < 3; c++ ){ | |
|           nnpfc_tm_cv_primaries_x[ c ] | u(16) |
|           nnpfc_tm_cv_primaries_y[ c ] | u(16) |
|         } | |
|       } | |
|       nnpfc_tm_cv_white_point_present_flag | u(1) |
|       if( nnpfc_tm_cv_white_point_present_flag ){ | |
|         nnpfc_tm_cv_white_point_x | u(16) |
|         nnpfc_tm_cv_white_point_y | u(16) |
|       } | |

(continued)

| | |
|---|---|
| nnpfc_tm_cv_max_luminance_present_flag | u(1) |
| if( nnpfc_tm_cv_max_luminance_present_flag ) | |
|   nnpfc_tm_cv_max_luminance | u(32) |
| nnpfc_tm_cv_min_luminance_present_flag | u(1) |
| if( nnpfc_tm_cv_min_luminance_present_flag ) | |
|   nnpfc_tm_cv_min_luminance | u(32) |
| nnpfc_tm_cv_avg_luminance_present_flag | u(1) |
| if( nnpfc_tm_cv_avg_luminance_present_flag ) | |
|   nnpfc_tm_cv_avg_luminance | u(32) |
| nnpfc_tm_cv_max_content_light_level_present_flag | u(1) |
| if( nnpfc_tm_cv_max_content_light_level_present_flag) | |
|   nnpfc_tm_cv_max_content_light_level | u(16) |
| nnpfc_tm_cv_max_pic_average_light_level_present_flag | u (1) |
| if( nnpfc_tm_cv_max_pic_average_light_level_present_flag) | |
|   nnpfc_tm_cv_max_pic_average_light_level | u(16) |
| nnpfc_tm_adaptation_information_present_flag | u(1) |
| if(nnpfc_tm_adaptation_information_present_flag){ | |
|   nnpfc_ratio_luminance_value | u(8) |
|   nnpfc_ratio_luminance_sign_flag | u(1) |
|   nnpfc_ratio_energy_value | u(8) |
|   nnpfc_ratio_energy_sign_flag | u(1) |
|   nnpfc_quality_metric | u(3) |
|   nnpfc_expected_quality | u(8) |
|   nnpfc_display_model | u(4) |
|   } | |
|  } | |
| ... | |

The semantics for the syntax elements of table 4 related to the target colour volume are as follows. Numerical values are given as examples and may be replaced by other values.

The variable transferCharacteristics may be specified as follows. If an alternative transfer characteristics SEI message is present for the CLVS, transferCharacteristics may be set equal to preferred_transfer_characteristics. Otherwise, (an alternative transfer characteristics SEI message is not present for the CLVS), transferCharacteristics may be set equal to vui_transfer_characteristics.

The target content colour metadata may not be present in the NNPFC SEI message, and decoders may ignore them, when any of the following conditions is true: when any of the values of transferCharacteristics, vui_colour_primaries, and vui_matrix_coeffs has a value defined as unknown or unspecified, or when the value of vui_transfer_characteristics is equal to 2, 4, or 5 or when the value of vui_colour_primaries is equal to 2.

The following may apply when converting the signal from a non-linear to a linear representation:if the value of transferCharacteristics is equal to 1, 6, 7, 14, or 15, the Rec. ITU-R BT.1886 reference electro-optical transfer function may be used to convert the signal to its linear representation, where the value of screen luminance for white is set equal to 100 candelas per square metre, the value of screen luminance for black is set equal to 0 candelas per square metre, and the value of the exponent of the power function is set equal to 2.4, otherwise, if the value of transferCharacteristics is equal to 18, the hybrid log-gamma reference electro-optical transfer function specified in Rec. ITU-R BT.2100 may be used to convert the signal to its linear representation, where the value of nominal peak luminance of the display is set equal to 1000 candelas per square metre, the value of the display luminance for black is set equal to 0 candelas per square metre, and the value of system gamma is set equal to 1.2, otherwise (the value of transferCharacteristics is not equal to 1, 6, 7, 14, 15, or 18) when the content colour volume SEI message is present, the exact inverse of the transfer function specified in specified in the VUI parameters may be used to convert the non-linear signal to a linear representation.

nnpfc_tm_cv_primaries_present_flag equal to 1 may specify that the syntax elements nnpfc_tm_cv_primaries_x[ c ] and nnpfc_tm_cv_primaries_y[ c ] are present. nnpfc_tm_cv_primaries_present flag equal to 0 may specify that the syntax elements nnpfc_tm_cv_primaries_x[ c ] and nnpfc_tm_cv_primaries_y[ c ] are not present.

nnpfc_tm_cv_white_point_present_flag equal to 1 may specify that the syntax elements nnpfc_tm_cv_white_point_x and nnpfc_tm_cv_white_point_y are present. nnpfc_tm_cv_white_point_present flag equal to 0 may specify that the syntax elements nnpfc _tm_cv _white_point _x[ c ] and nnpfc _tm_cv _white_point _y[ c ] are not present.

nnpfc _tm_cv _min_luminance_present flag equal to 1 may specify that the syntax element nnpfc_tm_cv_min_luminance is present. nnpfc_tm_cv_min_luminance_present_flag equal to 0 may specify that the syntax element nnpfc_tm_cv_min_luminance is not present.

nnpfc_tm_cv_max_luminance_present flag equal to 1 may specify that the syntax element nnpfc_tm_cv_max_luminance is present. nnpfc_tm_cv_max_luminance_present flag equal to 0 may specify that the syntax element nnpfc_tm_cv_max_luminance is not present.

nnpfc_tm_cv_avg_luminance_present flag equal to 1 may specify that the syntax element nnpfc_tm_cv_avg_luminance is present. nnpfc_tm_cv_avg_luminance_present_flag equal to 0 may specify that the syntax element nnpfc tm_cv_avg luminance is not present.

nnpfc_tm_cv_max_content_light_level_present_flag equal to 1 may specify that the syntax element nnpfc_tm_cv_max_content_light_level is present. nnpfc _tm_cv_max_content_light_level_present_flag equal to 0 may specify that the syntax element nnpfc _tm_cv_max_content_light_level is not present.

nnpfc_tm_cv_max_pic_average_light_level_present_flag equal to 1 may specify that the syntax element nnpfc_tm_cv_max_pic_average_light_level is present. nnpfc_tm_cv_max_pic_average_light_level_present_flag equal to 0 may specify that the syntax element nnpfc _tm_cv _max_pic_average_light_level is not present.

In an embodiment, the values of nnpfc_tm_primaries_present flag, nnpfc_tm_white_point_present_flag, nnpfc _tm_cv_min_luminance_present flag, nnpfc_tm_cv_max_luminance_present flag, nnpfc_tm_cv_avg_luminance_present_flag, nnpfc_tm_cv_max_content_light_level_present_flag, and nnpfc_tm_cv_max_pic_average_light_level_present_flag may not be all be equal to 0.

nnpfc_tm_adaptation_information_present_flag indicates if additional information related to the adaptation of the colour volume as a result of the tone mapping operation, for example the syntax elements nnpf_ratio_luminance_value, nnpf_ratio_luminance_sign_flag, nnpfc_display_model, is present. If nnpfc_adaptation_information_present_flag equals to 1, additional information related to the adaptation of the colour volume as a result of the tone mapping operation, for example the syntax elements nnpf_ratio_luminance_value, nnpf_ratio_luminance_sign_flag, nnpfc_display_model, is present. If nnpfc_adaptation_information_present_flag equals to 0, no additional information related to the adaptation of the colour volume as a result of the tone mapping operation, for example the syntax elements nnpf_ratio_luminance_value, nnpf_ratio_luminance_sign_flag, nnpfc display_model, is present.

nnpfc_tm_cv_primaries_x[ c ], when in the range of 5 to 37 000, inclusive, may specify the normalized x chromaticity coordinate of the colour primary component c of the (e.g., maximal) target colour volume for all pictures for which the SEI message persists resulting from the tone mapping operation, according to the CIE 1931 definition of x as specified in ISO/CIE 11664-1, in increments of 0.00002. When nnpfc_tm_cv_primaries_x[ c ] is not in the range of 5 to 37 000, inclusive, the normalized x chromaticity coordinate of the colour primary component c of the maximal colour volume resulting from the tone mapping operation may be unknown or unspecified or specified by other means not specified in this document.

nnpfc_tm_cv_primaries_y[ c ], when in the range of 5 to 42 000, inclusive, may specify the normalized y chromaticity coordinate of the colour primary component c of the (e.g., maximal) target colour volume for all pictures for which the SEI message persists resulting from the tone mapping operation, according to the CIE 1931 definition of y as specified in ISO/CIE 11664-1, in increments of 0.00002. When nnpfc_tm_cv_primaries_y[ c ] is not in the range of 5 to 42 000, inclusive, the normalized y chromaticity coordinate of the colour primary component c of the maximal colour volume resulting from the tone mapping operation may be unknown or unspecified or specified by other means not specified in this document.

Colour volumes that use red, green, and blue colour primaries may be described with index value c equal to 0 for the green primary, c equal to 1 for the blue primary, and c equal to 2 for the red colour primary specified in the VUI parameters.

nnpfc_tm_cv_white_point_x (for example when in the range of 5 to 37 000, inclusive,) specifies the normalized x chromaticity coordinate of the white point of the (e.g., maximal) target colour volume after application of the NNPF, according to the CIE 1931 definition of x as specified in ISO/CIE 11664-1, in normalized increments of 0.00002. When nnpfc_tm_cv_white_point_x is not in the range of 5 to 37 000, inclusive, the normalized x chromaticity coordinate of the white point of the maximal colour volume resulting from the tone mapping operation is indicated to be unknown or unspecified or specified by other means not specified in this document.

nnpfc _tm_cv_white_point_y (for example when in the range of 5 to 42 000, inclusive,) specifies the normalized y chromaticity coordinate of the white point of the (e.g., maximal) colour volume after application of the NNPF, according to the CIE 1931 definition of y as specified in ISO/CIE 11664-1, in normalized increments of 0.00002. When nnpfc_tm_cv_white_point_y is not in the range of 5 to 42 000, inclusive, the normalized y chromaticity coordinate of the white point of the maximal colour volume resulting from the tone mapping operation is indicated to be unknown or unspecified or specified by other means not specified in this document.

nnpfc_tm_cv_max_luminance, when in the range of 50 000 to 100 000 000, may specify the nominal maximum luminance of the (e.g, maximal) target colour volume for all pictures for which the SEI message persists resulting from the tone mapping operation in units of 0.0001 candelas per square metre. When nnpfc_tm _cv_max_luminance is not in the range of 50 000 to 100 000 000, the nominal maximum luminance of the (e.g., maximal) target colour volume resulting from the tone mapping operation may be indicated to be unknown or unspecified or specified by other means not specified in this document.

nnpfc_tm_cv_min_luminance, when in the range of 1 to 50 000, may specify the nominal minimum luminance of the (e.g., maximal) target colour volume for all pictures for which the SEI message persists resulting from the tone mapping operation in units of 0.0001 candelas per square metre. When nnpfc_tm_cv_min_luminance is not in the range of 1 to 50 000, the nominal minimum luminance of the (e.g., maximal) target colour volume resulting from the tone mapping operation may be unknown or unspecified or specified by other means not specified in this document. When nnpfc_tm_cv_max_luminance is equal to 50 000, nnpfc_tm_cv_min_luminance may not be equal to 50 000.

nnpfc_tm_cv_avg_luminance may specify the nominal average luminance of the (e.g., maximal) target colour volume for all pictures for which the SEI message persists resulting from the tone mapping operation in units of 0.0001 candelas per square metre. When nnpfc_tm_cv_avg_luminance is 0, the nominal average luminance of the (e.g., maximal) target colour volume resulting from the tone mapping operation may be unknown or unspecified or specified by other means not specified in this document.

The value of nnpfc_tm_cv_min_luminance, when present, may be less than or equal to nnpfc_tm_cv_avg_luminance, when present. The value of nnpfc_tm_cv_avg_luminance, when present, may be less than or equal to nnpfc_tm_cv_max_luminance, when present. The value of nnpfc_tm_cv_min_luminance, when present, may be less than or equal to nnpfc_tm_cv_max_luminance, when present.

nnpfc_tm_cv_max_content_light_level, when not equal to 0, may indicate an upper bound on the maximum light level of the (e.g., maximal) target colour volume in a 4:4:4 representation of red, green, and blue colour primary intensities (in the linear light domain) for all pictures for which the SEI message persists, in units of candelas per square metre. When nnpfc_tm_cv_max_content_light_level equal to 0, no such upper bound may be indicated.

nnpfc_tm_cv_max_pic_average_light_level, when not equal to 0, indicates an upper bound on the maximum average light level of the colour volume in a 4:4:4 representation of red, green, and blue colour primary intensities (in the linear light domain) for all pictures for which the SEI message persists, in units of candelas per square metre. When nnpfc_tm_cv_max_pic_average_light_level equal to 0, no such upper bound may be indicated.

In the above definitions of the syntax elements, other embodiments may define the syntax elements relatively to the target colour volume after the tone mapping process, the average target colour volume after the tone mapping process, or the minimal target colour volume after the tone mapping process or any other selection criterion of a target colour volume corresponding to the processing.

The semantics for the syntax elements of table 4 related to the adaptation metadata are as follows. These syntax elements are optional and related to luminance, energy and quality variations between the mapped samples and the original ones. Similarly to luminance-related metadata, brightness related metadata can be added. Some additional information related to the applied tone mapping operation may be added, such as the type of display compatible with the applied tone mapping operation.

nnpfc_ratio_luminance_value, when ToneMappingFlag is equal to 1 and nnpfc_adaptation_information_present flag is equal to 1, may specify the amount of luminance adaptation through (e.g., average) luminance decrease or increase (accordingly with the value of the nnpfc_ratio_luminance_sign_flag field) the Tone Mapping post-filter should achieve. It could be coded over 8 bits in a preferred embodiment.

In a variant, nnpfc_ratio_luminance_value may specify the expected percentage of luminance adaptation through (e.g., average) luminance decrease or increase (accordingly with the value of the nnpfc_ratio_luminance_sign_flag field) that the Tone Mapping post-filter may achieve. The percentage of luminance adaptation may be considered relatively to the average luminance of the content before applying the NNPF Tone Mapping. The percentage ratio may be computed using the following equation:

$$ratio = \frac{\text{nnpfc\_ratio\_luminance\_value}}{100}$$

The expected luminance after application of the NNPF Tone Mapping may be derived as follows:

If *nnpfc_ratio_luminance_sign_flag* == 1:

$$luminance_{new} = (1 - ratio) * luminance_{old}$$

If nnpfc_ratio_luminance_sign_flag == 0:

$$luminance_{new} = (1 + ratio) * luminance_{old}$$

When nnpfc_ratio_luminance value is equal to 0, it may be interpreted as the amount of luminance adaptation as a result of the Tone Mapping operation is not conveyed or not known. In this case, the nnpfc_ratio_luminance_sign_flag may be omitted (e.g., not included in the SEI message).

nnpfc_ratio_luminance_sign_flag may specify if the value of nnpfc_ratio_luminance_value may be considered as negative or positive. If nnpfc_ratio_luminance_sign_flag equals 0, the use of the NNPF may result in an increase of content luminance. If nnpfc_ratio_luminance_sign_flag equals 1, the use of the NNPF may result in a decrease in terms of content luminance.

nnpfc_ratio_energy_value, when ToneMappingFlag is equal to 1 and nnpfc_adaptation_information_present flag is equal to 1, may specify the amount of energy adaptation through energy decrease or increase (accordingly with the value of the nnpfc_ratio_energy_sign_flag field) the Tone Mapping post-filter may achieve. It could be coded over 8 bits in a preferred embodiment.

When nnpfc_ratio_energy_value is equal to 0, it may be interpreted as the amount of energy adaptation as a result of the Tone Mapping operation is not conveyed or not known. In this case, the nnpfc_ratio_energy_sign_flag may be omitted (e.g., not included in the SEI message).

nnpfc_ratio_energy_sign_flag may specify if the value of nnpfc_ratio_energy_value may be considered as negative or positive. If nnpfc_ratio_energy_sign_flag equals 0, the use of the NNPF may result in an increase of energy consumption. If nnpfc_ratio_energy_sign_flag equals 1, the use of the NNPF may result in a decrease in terms of energy consumption.

nnpfc_expected_quality may specify the quality of the video after applying the tone mapping neural network post filter for luminance, brightness and/or energy adaptation. Examples of quality metrics may be PSNR, V-MAF or SSIM values for the modified picture after applying the neural network post filter as specified in the table below. This parameter may be expressed as an absolute value or as a percentage value of reduction of quality according to a selected quality metric in comparison with its nominal value.

In the above definitions of the adaptation metadata syntax elements, other embodiments may define the syntax elements relatively to average values of luminance ratio, expected quality and energy ratio. In other embodiments, the syntax elements may be defined to maximal, minimal values of luminance ratio, expected quality and energy ratio. Other criteria may be used to select the values of the luminance ratio, expected quality and energy ratio.

nnpfc_video_quality_metric may indicate the quality metric to be considered when considering the change (e.g., loss) of quality after applying the NNPF. The selected quality metric is represented by a value selected in the Table 5.

Table 5

| nnpfc_video_quality_metric field value | Metric name |
| --- | --- |
| 0x00 | PSNR |
| 0x01 | SSIM |
| 0x02 | wPSNR |
| 0x03 | WS-PSNR |
| 0x04 | V-MAF |
| 0x05..0x07 | Reserved for future metrics |

nnpfc_display_model is a bit field mask which may indicate the display models on which the tone mapping neural network post filter for brightness adaptation may be used. The display model may be represented by a value selected in the Table 6.

Table 6

| Bit number | Display model |
|---|---|
| 0 | Transmissive pixel |
| 1 | Emissive pixel |
| 2..3 | Reserved for future types |

For example, nnpfc_display_type_field=$11_2$ (corresponding to having the two first bits equal to 1 in the bitfield, in the base-2 numeral system) means that the NNPF can be used for both "Transmissive pixel" and "Emissive pixel" display models.

In addition to the syntax proposed in Table 4, the addition of the container colour volume information for the target colour volume may be done using the syntax described in Table 7.

Table 7

| ... | |
|---|---|
| npfc_container_colour_description_present_flag | u(1) |
| if( nnpfc_container_colour_description_present_flag) { | |
| vnnpfc_container_colour_primaries | u(8) |
| nnpfc_container_transfer_characteristics | u(8) |
| nnpfc_container_matrix_coeffs | u(8) |
| vnnpfc_container_full_range_flag | u(1) |
| } | |
| ... | |

The semantics of the corresponding syntax elements is as follows:

nnpfc_container_colour_primaries may have the same semantics as specified in clause 8.1 of ISO/IEC 23091 for the ColourPrimaries syntax element, except as follows. nnpfc_container_colour_primaries may specify the colour primaries used to represent the samples of the picture after the Tone Mapping operation. When nnpfc_container_colour_primaries is not present in the NNPFC SEI message, the value of nnpfc_container_colour_primaries may be inferred to be equal to ColourPrimaries.

nnpfc_container_transfer_characteristics may have the same semantics as specified in clause 8.2 of ISO/IEC 23091 for the TransferCharacteristics syntax element, except as follows. nnpfc_container_transfer_characteristics may specify the transfer characteristics of the picture after applying the Tone Mapping operation, rather than the transfer characteristics used for the CLVS. When nnpfc_container_transfer_characteristics is not present in the NNPFC SEI message, the value of nnpfc_container_transfer_characteristics may be inferred to be equal to TransferCharacteristics.

nnpfc_container_matrix_coeffs may describe the equations used in deriving luma and chroma signals from the green, blue, and red, or Y, Z, and X primaries. Its semantics may apply to the pictures after applying the Tone Mapping operation and may be as specified for MatrixCoefficients in Rec. ITU-T H.273 | ISO/IEC 23091-2 with BitDepthY and BitDepthC being equal to outTensorBitDepthY and outTensorBitDepthC, respectively.

nnpfc_container_full_range_flag may indicate the scaling and offset values applied in association with the matrix coefficients as specified by nnpfc_container_matrix_coeffs. Its semantics may be as specified for the VideoFullRangeFlag parameter in Rec. ITU-T H.273 | ISO/IEC 23091-2.

In a variant embodiment, in case all presence flags related to the target colour volume are set to 0, it means that the target colour volume is provided through external means.

Multiple variant embodiments can be envisaged. In some embodiments, the metadata flags specifying the presence or absence of metadata values might not be signaled. In an embodiment, solely the information on the primaries is signaled, together with the metadata related to the adaptation information. In embodiments, any variation of the syntax by keeping any sub-list of the above metadata is possible. In embodiments, any subset of the metadata may be considered as optional. For example, in some embodiments, the metadata related to the modified white point are not present. In this case, it must be understood that the white point defined by the NNPFC output colour gamut remains the same. In other example embodiments, the metadata related to the definition of the range of luminance and/or the average luminance after the tone mapped operations, are not present. In an embodiment, additional information related to a ratio of brightness adaptation may be added. In an embodiment, the metadata related to the adaptation levels in terms of luminance, brightness, quality and energy are not present (they might be defined externally) and solely the information related to the colour volume is specified.

In at least one embodiment, the semantics of the adaptation metadata introduced above might be modified as follows.

nnpfc_tm_cv_primaries_x[ c ] may specify the normalized x chromaticity coordinate of the colour primary component c of the (e.g., maximal) target colour volume of the (e.g., mapped) samples after application of the NNPF, according to the CIE 1931 definition of x as specified in ISO/CIE 11664-1 (see also ISO/CIE 11664-3 and CIE 15), in normalized increments of 0.00002.

nnpfc_tm_cv_primaries_y[ c ] may specify the normalized y chromaticity coordinate of the colour primary component c of the (e.g., maximal) colour volume of the (e.g., mapped) samples after application of the NNPF, according to the CIE 1931 definition of y as specified in ISO/CIE 11664-1 (see also ISO/CIE 11664-3 and CIE 15), in normalized increments of 0.00002.

The values of nnpfc_tm_cv_primaries_x[ c ] and nnpfc_tm_cv_primaries_y[ c ] may be in the range of -5 000 000 to 5 000 000, inclusive.

When nnpfc_tm_cv_primaries_x[ c ] and nnpfc_tm_cv_primaries_y[ c ] are not present, they may be inferred to be equal to the normalized x and y chromaticity coordinates, respectively, specified by vui_colour_primaries.

nnpfc_tm_cv_min_luminance may specify the normalized minimum luminance value, according to CIE 1931, that is expected to be present in the content processed by the NNPF after the Tone Mapping operation, where values are normalized to Lo or Lc as specified in the VUI parameters according to the indicated transfer characteristics of the signal. The values of nnpfc_tm_cv_min_luminance are in normalized increments of 0.0000001.

nnpfc_tm_cv_max_luminance may specify the maximum luminance value, according to CIE 1931, that is expected to be present in the content processed by the NNPF after the Tone Mapping operation, where values are normalized to Lo or Lc as specified in the VUI parameters according to the transfer characteristics of the signal. The values of nnpfc_tm_cv_max_luminance are in normalized increments of 0.0000001.

nnpfc_tm_cv_avg_luminance may specify the average luminance value, according to CIE 1931, that is expected to be present in the content processed by the NNPF, after the Tone Mapping operation, where values are normalized to Lo or Lc as specified in the VUI parameters according to the transfer characteristics of the signal. The values of nnpfc_tm_cv_avg_luminance are in normalized increments of 0.0000001.

The resulting domain from this conversion process might or might not represent light in a source or display domain - it is merely a gamut representation domain rather than necessarily being a representation of actual light in either the scene or display domain. Therefore, the values corresponding to nnpfc_tm_cv_min_luminance_value, nnpfc_tm_cv_max_luminance_value, and nnpfc_tm_cv_avg_luminance_value might not necessarily correspond to a true luminance value.

The value of nnpfc_tm_cv_min_luminance value, when present, may be less than or equal to nnpfc_tm_cv_avg_luminance_value, when present. The value of nnpfc_tm_cv_avg_luminance value, when present, may be less than or equal to nnpfc_tm_cv_max_luminance_value, when present. The value of nnpfc_tm_cv_min_luminance_value, when present, may be less than or equal to nnpfc_tm_cv_max_luminance_value, when present.

When the visually relevant region does not correspond to the entire cropped post-processed picture, such as for "letterbox" encoding of video content with a wide picture aspect ratio within a taller cropped post-processed picture, the indicated nnpfc_tm_cv_min_luminance_value, nnpfc_tm_cv_max_luminance_value, and nnpfc_tm_cv_avg_luminance value may correspond only to values within the visually relevant region.

Depending on the type of the specified filter, the neural network post filter can process the YUV components or the RGB components. In this case, a flag nnpfc_separate_colour_description_present_flag may enable to specify the colour transformation.

In at least one embodiment, the input post filter is YUV and the output is also YUV. Several strategies can be defined. A first strategy is that the post filter only may modify the Y component, U and V components are not changed. A second strategy is that the post filter may compute the new Y component from the incoming Y component. However, the RGB values of the input image may be modified by multiplying the RGB components by the ratio of the luminance. In this context, two colour transformations may be made: YUV to RGB, and the modified RGB to YUV.

In at least one embodiment, only one between the nnpfc ratio_luminance value and the nnpfc_ratio_energy_value may be transmitted. In another embodiment, if both are transmitted, the adaptation luminance value and the adaptation energy value may be coherent, i.e., the luminance change value corresponds to the energy change value.

In at least one embodiment, values of metadata nnpfc_ratio_luminance_value, nnpfc_ratio_energy_value, nnpfc_expected_quality correspond to maximal values (i.e., computed or estimated on a per pixel basis) over the set of pictures on which the NNPF will be applied. In other embodiments, those values correspond to maximal average values over the set of pictures on which the NNPF will be applied, i.e., an average is computed per picture and the maximal average over a set of pictures is kept.

In at least one embodiment, nnpfc _quality_metric, nnpfc_expected_quality and nnpfc_display_model correspond to expected values that the NNPF should achieve. In some embodiments, those values correspond to real precomputed values on a set of processed pictures by using the NNPF.

In some embodiments, nnpfc_quality_metric, nnpfc _expected_quality and nnpfc_display_model might be optional metadata.

In some embodiments, luminance adaptation is replaced by brightness adaptation or light level adaptation according to the following definitions: "luminance" is the light that the light source creates (objectively measured in candela per square meters) whereas "brightness" is how dim or bright that light looks to individuals. Brightness is a subjective measure that cannot be measured but can be scaled by a certain percentage.

Different representations may be used for the nnpfc_ratio_luminance value. A first representation, as illustrated in Table 8, is a value coded over 2 bits expressing a percentage of adaptation ratio.

Table 8

| nnpfc_ratio_luminance_value | Interpretation |
|---|---|
| 0 | The luminance adaptation ratio is 5% |
| 1 | The luminance adaptation ratio is 10% |
| 2 | The luminance adaptation ratio is 20% |
| 3 | The luminance adaptation ratio is 30% |

A second representation for the nnpfc_ratio_luminance_value is a percentage value (i.e., between 0 and 100), for example coded over 4 bits, providing an amount of luminance adaptation the post-filter should achieve.

A third representation for the nnpfc_ratio_luminance_value is a signed value. In this case, the sign flag nnpfc_ratio_luminance_sign_flag is no longer needed. Using such representation for example coded over 8 bits, values below 128 should be considered as negative, values above 128 should be considered as positive, value = 0 corresponds to a decrease of luminance equal to e.g, 30%, value = 128 corresponds to no change and value = 255 corresponds to an increase of luminance equal to e.g., 30%.

The semantics of these three representations may apply similarly for energy and brightness ratios and quality levels.

**Figure 7B** illustrates an overview of the syntax elements according to embodiments where target colour volume information is carried by an external color volume metadata structure. In such embodiment, a tone mapping operation is signaled as purpose of the NNPF (nnpfc_purpose) and syntax elements describing a target colour volume for the tone mapped picture samples are carried using other means, for example inserted in another colour volume SEI message (e.g., a Content Colour Volume SEI or a Target Content Colour Volume SEI) and not signaled in the NNPFC SEI message directly. An information (nnpfc_tm_target_colour_volume_id) is signaled in the NNPFC SEI message enabling to identify the external color volume metadata structure describing the target colour volume. An example of external color volume metadata structure is a so-called Target Colour Volume Information (TCVI) SEI message that is dedicated to carrying resulting colour volume for post the processed content. Such SEI message could be used to carry colour volume information in relation with tone mapping operations. In a variant a so-called Content Colour Volume (CCV) SEI message may be used to carry the resulting colour volume for the post-processed content. Some adaptation metadata may optionally be inserted also, providing elements indicative of the luminance, energy, brightness and quality variations between the mapped samples and the original ones. These syntax elements are present when the ToneMappingFlag is set.

These syntax elements are added to the syntax of Table 2 as illustrated below in Table 9 where only the new elements (i.e. not previously present in table 2) are represented.

Table 9

| nn_post_filter_characteristics( payloadSize ) { | Descriptor |
|---|---|

(continued)

| ... | |
|---|---|
| if(ToneMappingFlag) { | |
| nnpfc_tm_target_colour_volume_id | ue(v) |
| nnpfc_tm_adaptation_information_present_flag | u(1) |
| ... | |
| } | |
| ... | |

The semantics for the syntax elements of table 9 are as follows.

nnpfc_tm_target_colour_volume_id may specify the identifier to the Target Colour Volume Information (e.g., TCVI or Content Colour Volume (CCV)) SEI message that corresponds to the (e.g., expected) (e.g., maximal) colour volume of the picture samples resulting from the Tone Mapping operation.

In a variant, another naming may be used to replace the nnpfc_tm_target_colour_volume_id.

When the nnpfc_tm_adaptation_information_present_flag is set to '1', the adaptation metadata as described in table 4 are inserted after this flag.

In a variant embodiment, when nnpfc_tm_target_colour_volume_id is equal to 0, this may mean that the target colour volume information is signaled inside the NNPFC SEI, as described in previous embodiments.

In at least one embodiment illustrated in Table 10, the signaling of the target colour volume internally to or externally to the NNPFC SEI message is controlled by a flag, nnpfc_tm_external_colour_volume_flag. When the flag is equal to 1, the id of the TCVI SEI message is signaled. Otherwise, when the flag is equal to 0, the target colour volume syntax elements are signaled directly in the NNPFC SEI message as described in Table 4.

Table 10

| nn_post_filter_characteristics( payloadSize ) { | Descriptor |
|---|---|
| ... | |
| if(ToneMappingFlag) { | |
| nnpfc_tm_external_colour_volume_flag | u (1) |
| if(nnpfc_tm_external_colour_volume_flag) | |
| nnpfc_tm_target_colour_volume_id | ue(v) |
| else { | |
| ... | |
| Syntax elements describing the target colour volume (cf. Table 4) | |
| ... | |
| } | |
| nnpfc_tm_adaptation_information_present_flag | u(1) |
| ... | |
| } | |
| ... | |

The semantics for the syntax elements of table 10 are as follows.

nnpfc_tm_external_colour_volume_flag equal to 1 may specify that the colour volume resulting from the Tone Mapping operation is not specified in the SEI message, but in an external SEI message (for example the TCVI SEI or the CCV SEI). nnpfc_tm_external_colour_volume_flag equal to 0 may specify that the colour volume resulting from the Tone Mapping operation is specified in the NNPFC SEI message.

When the nnpfc_tm_adaptation_information_present_flag is set to '1', the adaptation metadata as described in table 4 are inserted after this flag.

In a variant embodiment, when nnpfc_tm_external_colour_volume_flag equal to 0, the colour volume resulting from the Tone Mapping operation is not specified and it is up to the application that applies the tone mapping to determine the target colour volume. For example, it may be determined through external means.

In a variant embodiment, nnpfc_tm_external_colour_volume_flag equal to 1 may specify that the colour volume resulting from the Tone Mapping operation is not specified in the SEI message, but may be defined by an external means. This external means can be another dedicated colour volume SEI message, or maybe information provided by the application (e.g. by the rendering device). nnpfc_tm_external_colour_volume_flag equal to 0 specifies that the colour volume resulting from the Tone Mapping operation may not be specified.

In at least one embodiment illustrated in Table 11, the nnpfc_tm_external_colour_volume_flag is replaced by a bitfield nnpfc_tm_external_colour_volume_bitfield which indicates the different potential means carrying the colour volume.

Table 11

| Bitfield | Description |
|---|---|
| 0 | The colour volume is specified in the NNPFC SEI message |
| 1 | The colour volume is specified through a Content Colour Volume (CCV) SEI message |
| 2 | The colour volume is specified through a dedicated Colour Volume SEI message, e.g, the Target Colour Volume Information SEI message |
| 3 | Reserved |

The semantics for the syntax elements of table 11 are as follows.

nnpfc_tm_external_colour_volume_bitfield may specify how the colour volume resulting from the Tone Mapping operation is carried as indicated in the above table . When nnpfc_tm_external_colour_volume_bitfield indicates that a dedicated Colour Volume SEI message (e.g., an TCVI SEI) is used, the Id of this dedicated Colour Volume SEI message may be signaled. In a variant embodiment, the dedicated Colour Volume SEI message may be a new SEI message (TCVI SEI) defined in the VSEI specification. In a variant embodiment, the dedicated Colour Volume SEI message may be a user defined SEI message defined outside of the VSEI specification.

In at least one embodiment, the adaptation ratios may also be defined through external means, for example, they may be carried within a Target Colour Volume Information SEI message or a Colour Volume SEI message.

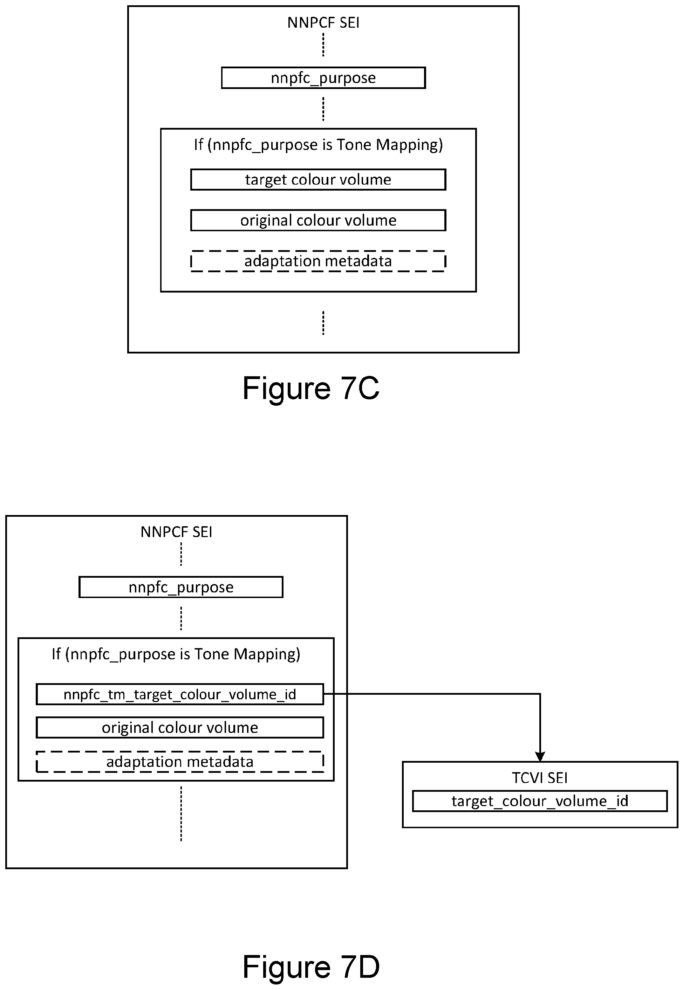

**Figure** 7C illustrates an overview of the syntax elements according to embodiments where target colour volume information and original colour volume information are inserted in a NNPFC SEI message. In such embodiment, the syntax of Table 2 is modified to include also the original colour volume of the sample values before the Tone Mapping operation. These additional syntax elements for the original colour volume are added to the syntax of Table 2 as illustrated below in Table 12.

Table 12

| nn_post_filter_characteristics( payloadSize ) { | Descriptor |
|---|---|
| nnpfc_purpose | u(16) |
| nnpfc_id | ue(v) |
| ... | |
|   if(ToneMappingFlag) { | |
|     nnpfc_tm_cv_primaries_present_flag | u (1) |
|     if( nnpfc_tm_cv_primaries_present_flag){ | |
|      for( c=0; c < 3; c++ ){ | |
|       nnpfc_tm_cv_primaries_x[ c ] | u(16) |
|       nnpfc_tm_cv_primaries_y[ c ] | u(16) |
|      } | |
|     } | |
|     nnpfc_tm_cv_white_point_present_flag | u (1) |
|     if( nnpfc_tm_cv_white_point_present_flag ){ | |

(continued)

| | |
|---|---|
| nnpfc_tm_cv_white_point_x | u(16) |
| nnpfc_tm_cv_white_point_y | u(16) |
| } | |
| nnpfc_tm_cv_max_luminance_present_flag | u (1) |
| if( nnpfc_tm_cv_max_luminance_present_flag ) | |
| nnpfc_tm_cv_max_luminance | u(32) |
| nnpfc_tm cv_min_luminance_present_flag | u (1) |
| if( nnpfc_tm_cv_min_luminance_present_flag ) | |
| nnpfc_tm_cv_min_luminance | u(32) |
| nnpfc_tm_cv _avg_luminance_present_flag | u (1) |
| if( nnpfc_tm_cv_avg_luminance_present_flag ) | |
| nnpfc_tm_cv_avg_luminance | u(32) |
| nnpfc_ori_cv_primaries_present_flag | u (1) |
| if( nnpfc_ori_cv_primaries_present_flag){ | |
| for( c=0; c < 3; c++ ){ | |
| nnpfc_ori_cv_primaries_x[ c ] | u(16) |
| nnpfc_ori_cv_primaries_y[ c ] | u(16) |
| } | |
| } | |
| nnpfc_ori_cv_white_point_present_flag | u (1) |
| if( nnpfc_ori_cv_white_point_present_flag ){ | |
| nnpfc_ori_cv_white_point_x | u(16) |
| nnpfc_ori_cv_white_point_y | u(16) |
| } | |
| nnpfc_ori_cv_max_luminance_present_flag | u (1) |
| if( nnpfc_ori_cv_max_luminance_present_flag) | |
| nnpfc_ori_cv_max_luminance | u(32) |
| nnpfc_ori_cv _min_luminance_present_flag | u (1) |
| if( nnpfc_ori_cv_min_luminance_present_flag ) | |
| nnpfc_ori_cv_min_luminance | u(32) |
| nnpfc_ori_cv _avg_luminance_present_flag | u (1) |
| if( nnpfc_ori_cv_avg_luminance_present_flag ) | |
| nnpfc_ori_cv_avg_luminance | u(32) |
| vnnpfc_tm_adaptation_information_present_flag | u(1) |
| if(nnpfc_tm_adaptation_information_present_flag){ | |
| nnpfc_ratio_luminance_value | u(8) |
| nnpfc_ratio_luminance_sign_flag | u (1) |
| nnpfc_ratio _energy_value | u(8) |
| nnpfc_ratio_energy_sign_flag | u (1) |
| nnpfc_quality_metric | u(3) |

(continued)

| | |
|---|---|
| nnpfc_expected_quality | u(8) |
| nnpfc_display_model | u(4) |
| } | |
| } | |
| ... | |

The semantics for the syntax elements of Table 12 are as follows.

nnpfc_ori_cv_primaries_present_flag equal to 1 may specify that the syntax elements nnpfc_ori_cv_primaries_x[ c ] and nnpfc_tm_cv_primaries_y[ c ] are present. nnpfc_ori_cv_primaries_present_flag equal to 0 may specify that the syntax elements nnpfc_ori_cv_primaries _x[ c ] and nnpfc_ori_cv_primaries_y[ c ] are not present.

nnpfc_ori_cv_white_point_present flag equal to 1 may specify that the syntax elements nnpfc_ori_cv_white_point_x and nnpfc_ori_cv_white_point_y are present. nnpfc _on_cv _white_point_present flag equal to 0 may specify that the syntax elements nnpfc_ori_cv_white_point_x[ c ] and nnpfc_ori_cv_white_point_y[ c ] are not present.

nnpfc_ori_cv_min_luminance_present flag equal to 1 may specify that the syntax element nnpfc_ori_cv_min_luminance is present. nnpfc_ori_cv_min_luminance_present flag equal to 0 may specify that the syntax element nnpfc_ori_cv_min_luminance is not present.

nnpfc _ori_cv_max_luminance_present flag equal to 1 may specify that the syntax element nnpfc_ori_cv_max_luminance is present. nnpfc_ori_cv_max_luminance_present_flag equal to 0 may specify that the syntax element nnpfc_ori_cv_max_luminance is not present.

nnpfc_ori_cv_avg_luminance_present_flag equal to 1 may specify that the syntax element nnpfc_ori_cv_avg_luminance is present. nnpfc_ori_cv_avg_luminance_present_flag equal to 0 may specify that the syntax element nnpfc_oricv_avg_luminance is not present.

nnpfc_ori_max_content_light_level_present_flag equal to 1 may specify that the syntax element nnpfc_ori_max_content_light_level is present. nnpfc_ori_max_content_light_level_present_flag equal to 0 may specify that the syntax element nnpfc_ori_max_content_light_level is not present.

nnpfc_ori_max_pic_average_light__level_present flag equal to 1 may specify that the syntax element nnpfc_ori_max_pic_average_light_level is present. nnpfc_ori_max_pic_average_light_level_present_flag equal to 0 may specify that the syntax element nnpfc_ori_max_pic_average_light_level is not present.

In an embodiment, the values of nnpfc_ori_primaries_present_flag, nnpfc_ori_white_point_present_flag, nnpfc_ori_cv_min_luminance_present_flag, nnpfc_ori_cv_max_luminance_present_flag, nnpfc_ori_max_content_light_level_present_flag, nnpfc_ori_max_pic_average_light_level_present_flag and nnpfc_ori_cv_avg_luminance_present_flag may not all be equal to 0.

nnpfc_ori_cv_primaries_x[ c ], when in the range of 5 to 37 000, inclusive, may specify the normalized x chromaticity coordinate of the colour primary component c of the (e.g., maximal) colour volume for all original sample values of the pictures for which the SEI message persists, according to the CIE 1931 definition of x as specified in ISO/CIE 11664-1 in increments of 0.00002. When nnpfc_ori_cv_primaries_x[ c ] is not in the range of 5 to 37 000, inclusive, the normalized x chromaticity coordinate of the colour primary component c of the (e.g., maximal) colour volume of the original sample values may be unknown or unspecified or specified by other means not specified in this document.

nnpfc_ori_cv_primaries_y[ c ], when in the range of 5 to 42 000, inclusive, may specify the normalized y chromaticity coordinate of the colour primary component c of the (e.g., maximal) colour volume for all original sample values of the pictures for which the SEI message persists, according to the CIE 1931 definition of y as specified in ISO/CIE 11664-1, in increments of 0.00002. When nnpfc _ori_cv_primaries_y[ c ] is not in the range of 5 to 42 000, inclusive, the normalized y chromaticity coordinate of the colour primary component c of the (e.g., maximal) colour volume of the original sample values may be unknown or unspecified or specified by other means not specified in this document.

For describing colour volumes that use red, green, and blue colour primaries, it is suggested that index value c equal to 0 should correspond to the green primary, c equal to 1 should correspond to the blue primary, and c equal to 2 should correspond to the red colour primary specified in the VUI parameters.

nnpfc_ori_cv_white_point_x, when in the range of 5 to 37 000, inclusive, may specify the normalized x chromaticity coordinate of the white point of the (e.g., maximal) colour volume for all original sample values of the pictures for which the SEI message persists, according to the CIE 1931 definition of x as specified in ISO/CIE 11664-1 , in normalized increments of 0.00002. When nnpfc_ori_cv_white_point_x is not in the range of 5 to 37 000, inclusive, the normalized x chromaticity coordinate of the white point of the (e.g., maximal) colour volume of the original sample values may be indicated to be unknown or unspecified or specified by other means not specified in this document.

nnpfc_ori_cv _white_point_y, when in the range of 5 to 42 000, inclusive, may specify the normalized y chromaticity coordinate of the white point of the (e.g., maximal) colour volume for all original sample values of the pictures for which the SEI message persists, according to the CIE 1931 definition of y as specified in ISO/CIE 11664-1, in normalized

increments of 0.00002. When nnpfc _ori_cv_white_point_y is not in the range of 5 to 42 000, inclusive, the normalized y chromaticity coordinate of the white point of the (e.g., maximal) colour volume of the original sample values may be indicated to be unknown or unspecified or specified by other means not specified in this document.

nnpfc_ori_cv_max_luminance, when in the range of 50 000 to 100 000 000, may specify the nominal maximum luminance of the (e.g., maximal) colour volume for all pictures for which the SEI message persists resulting from the tone mapped operation in units of 0.0001 candelas per square metre. When nnpfc_tm_cv_max_luminance is not in the range of 50 000 to 100 000 000, the nominal maximum luminance of the (e.g., maximal) colour volume resulting from the tone mapped operation may be indicated to be unknown or unspecified or specified by other means not specified in this document.

nnpfc_tm_cv_min_luminance, when in the range of 1 to 50 000, may specify the nominal minimum luminance of the (e.g., maximal) colour volume for all original sample values of the pictures for which the SEI message persists in units of 0.0001 candelas per square metre. When nnpfc_ori_cv_min_luminance is not in the range of 1 to 50 000, the nominal minimum luminance of the (e.g., maximal) colour volume of the original sample values may be unknown or unspecified or specified by other means not specified in this document. When nnpfc_ori_cv_max_luminance is equal to 50 000, nnpfc_ori_cv_min_luminance may not be equal to 50 000.

nnpfc_ori_cv_avg_luminance may specify the nominal average luminance of the (e.g., maximal) colour volume for all original sample values of the pictures for which the SEI message persists in units of 0.0001 candelas per square metre. When nnpfc_ori_cv_avg_luminance is 0, the nominal average luminance of the (e.g., maximal) colour volume of the original sample values may be unknown or unspecified or specified by other means not specified in this document.

The value of nnpfc_ori__cv_min_luminance, when present, may be less than or equal to nnpfc ori_cv_avg luminance, when present. The value of nnpfc_ori_cv_avg_luminance, when present, may be less than or equal to nnpfc_ori_cv_max_luminance, when present. The value of nnpfc_ori_cv_min_luminance, when present, may be less than or equal to nnpfc_oricv__max_luminance, when present.

nnpfc_ori_max_content_light_level, when not equal to 0, indicates an upper bound on the maximum light level of the (e.g., maximal) original colour volume in a 4:4:4 representation of red, green, and blue colour primary intensities (in the linear light domain) for all pictures for which the SEI message persists, in units of candelas per square metre. When nnpfc_max_content_light_level equal to 0, no such upper bound is indicated.

nnpfc_ori_max_pic_average_light_level, when not equal to 0, indicates an upper bound on the maximum average light level of the (e.g., maximal) original colour volume in a 4:4:4 representation of red, green, and blue colour primary intensities (in the linear light domain) for all pictures for which the SEI message persists, in units of candelas per square metre. When nnpfc_ori_max_pic_average_light_level equal to 0, no such upper bound is indicated.

In the above definitions of the syntax elements, other embodiments may define the syntax elements relatively to the original colour volume, the average original colour volume, or the minimal original colour volume or any other selection criterion of an original colour volume.

In a variant embodiment, in case all presence flags related to the target colour volume are set to 0, it means that the original colour volume is provided through external means.

Same variants in terms of syntax and semantics than those described for the target colour volume apply on the original colour volume.

In another embodiment, the above semantics for the syntax elements may be modified as follows.

nnpfc_ori_primaries_x[ c ] may specify the normalized x chromaticity coordinate of the colour primary component c of the (e.g., maximal) original content colour volume, according to the CIE 1931 definition of x and y as specified in ISO/CIE 11664-1, in normalized increments of 0.00002.

nnpfc_ori_primaries_y[ c ] may specify the normalized y chromaticity coordinates of the colour primary component c of the (e.g., maximal) original content colour volume, according to the CIE 1931 definition of x and y as specified in ISO/CIE 11664-1, in normalized increments of 0.00002.

For describing target colour volumes that use red, green, and blue colour primaries, it is suggested that index value c equal to 0 may correspond to the green primary, c equal to 1 may correspond to the blue primary, and c equal to 2 may correspond to the red colour primary specified in the VUI parameters.

The values of nnpfc_ori_primaries_x[ c ] and nnpfc_ori_primaries_y[ c ] may be in the range of -5 000 000 to 5 000 000, inclusive.

When nnpfc_ori_primaries_x[ c ] and nnpfc_ori_primaries_y[ c ] are not present, they may be inferred to be equal to the normalized x and y chromaticity coordinates, respectively, specified by vui_colour_primaries.

nnpfc_ori_min_luminance_value may specify the normalized minimum luminance value, according to CIE 1931, that is expected to be present in the original content, where values are normalized to Lo or Lc as specified in the VUI parameters according to the indicated transfer characteristics of the signal. The values of nnpfc min_luminance value may be in normalized increments of 0.0000001.

nnpfc_ori_max_luminance_value may specify the maximum luminance value, according to CIE 1931, that is expected to be present in the original content, where values are normalized to Lo or Lc as specified in the VUI parameters according to the transfer characteristics of the signal. The values of nnpfc_ori_max_luminance_value may be in normalized increments of 0.0000001.

nnpfc_avg_luminance value may specify the average luminance value, according to CIE 1931, that is expected to be present in the original content, where values are normalized to Lo or Lc as specified in the VUI parameters according to the transfer characteristics of the signal. The values of nnpfc_ori_avg_luminance_value may be in normalized increments of 0.0000001.

The resulting domain from this conversion process might or might not represent light in a source or display domain - it is merely a gamut representation domain rather than necessarily being a representation of actual light in either the scene or display domain. Therefore, the values corresponding to nnpfc_ori_min_luminance_value, nnpfc_ori_max_luminance value, and nnpfc_ori_avg_luminance_value might not necessarily correspond to a true luminance value.

The value of nnpfc ori_min_luminance value, when present, may be less than or equal to nnpfc_ori_avg_luminance_value, when present. The value of nnpfc_ori_avg_luminance_value, when present, may be less than or equal to nnpfc_ori_max_luminance_value, when present. The value of nnpfc_ori_min_luminance_value,when present, shall be less than or equal to nnpfc_ori_max_luminance_value, when present.

When the visually relevant region does not correspond to the entire cropped post-processed picture, such as for "letterbox" encoding of video content with a wide picture aspect ratio within a taller cropped picture, the indicated nnpfc_ori_min_luminance_value, nnpfc_ori_max_luminance_value, and nnpfc_ori_avg_luminance _value may correspond only to values within the visually relevant region.

**Figure 7D** illustrates an overview of the syntax elements according to embodiments where target colour volume information is carried by an external color volume metadata structure and original colour volume information is inserted in a NNPFC SEI message. Such embodiment combines the syntax elements related to the target colour volume as described in tables 8, 9, 10 with the syntax elements related to the original colour volume as described in table 11.

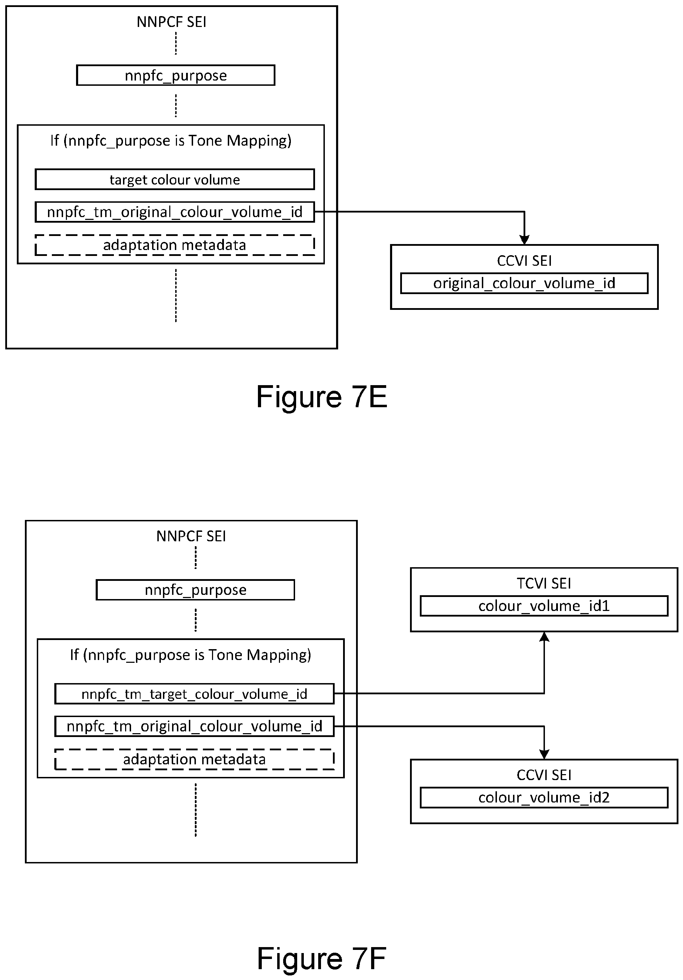

**Figure 7E** illustrates an overview of the syntax elements according to embodiments where target colour volume information is inserted in a NNPFC SEI message and original colour volume information is carried by an external color volume metadata structure. An example of external color volume metadata structure may be a Content Colour Volume (CCV) SEI message. The syntax elements related to the target colour volume information may be the same as defined in tables 4, 5, 6, 7. Syntax elements to identify the external metadata structure describing the original colour volume are inserted in the NNPFC SEI message. These syntax elements are added to the syntax of Table 4 as illustrated below in Table 13 where only the new elements (i.e., not previously present in Table 4) are represented.

Table 13

| nn_post_filter_characteristics( payloadSize ) { | Descriptor |
|---|---|
| ... | |
|    if(ToneMappingFlag) { | |
|       ... | |
|       Syntax elements describing the target colour volume (cf. Table 4) | |
|       ... | |
|       nnpfc_tm_original_colour_volume_id | ue(v) |
|       nnpfc_tm_adaptation_information_present_flag | u(1) |
|       ... | |
|    } | |
|  ... | |

The semantics for the syntax elements of table 13 are as follows.

nnpfc_tm_original_colour_volume_id may specify the identifier to the SEI message (E.g., a Content Colour Volume SEI) that corresponds to the colour volume of the original colour samples.

In a variant embodiment illustrated in Table 14, the internal or external signaling of the original colour volume information may be controlled by a flag, such as nnpfc_tm_original_colour_volume_flag. When nnpfc_tm_original_colourvolume_flag equal to 1, it may indicate that the colour volume of the original sample values is not specified in the SEI message, but in an external SEI message (e.g., a Content Colour Volume SEI). In this case, the id of the SEI message is signaled. When nnpfc_tm_original_colour_volume_flag equal to 0, it may indicate that the colour volume of the original sample values is directly specified inside the NNPFC SEI message, for example using the syntax related to the original colour volume described in Table 12.

Table 14

| nn_post_filter_characteristics( payloadSize ) { | Descriptor |
|---|---|
| ... | |
|    if(ToneMappingFlag) { | |
|       ... | |
|       Syntax elements describing the target colour volume (cf. Table 11) | |
|       ... | |
|       nnpfc_tm_original_colour_volume_flag | u (1) |
|       if(nnpfc_tm_original_colour_volume_flag) | |
|        nnpfc_tm_original_colour_volume_id | ue(v) |
|      else { | |
|       ... | |
|       Syntax elements describing the original colour volume (cf. Table 4) | |
|       ... | |
| | |
|      } | |
|      nnpfc_tm_adaptation_information_present_flag | u(1) |
|      ... | |
|      ... | |
|    } | |
|   ... | |

In a variant embodiment, when nnpfc_tm_original_colour_volume_flag equal to 0, the original colour volume may not be specified, and it is up to the application that applies the tone mapping to determine the original colour volume.

In variant embodiment, nnpfc_tm_originalcolourvolume_flag may indicate that external means may be used to define the original colour volume. When nnpfc_tm_original_colourvolume_flag equals to 1, it may indicate that the original colour volume may not be specified in the SEI message but may be defined by an external means. This external means can be another dedicated colour volume SEI message or may be information provided by the application. When nnpfc_tm_original_colour_volume_flag equals to 0, it may indicate that the original colour volume is not specified.

In an alternative embodiment, nnpfc_tm_original_colour_volume_flag may be replaced by a bitfield nnpfc_tm_original_colour_volume_bitfield which may indicate the different potential means carrying the colour volume. nnpfc_tm_original_colour_volume_bitfield may specify how the original colour volume is carried as indicated in the Table 15.

Table 15

| Bitfield | Description |
|---|---|
| 0 | The original colour volume is specified in the NNPFC SEI message |
| 1 | The original colour volume is specified through a Content Colour Volume (CCV) SEI message |
| 2 | The original colour volume is specified through a dedicated Colour Volume SEI message |
| 3 | Reserved |

When nnpfc_tm_original_colour_volume_bitfield indicates that a dedicated Colour Volume SEI message is used, the Id of this dedicated Colour Volume SEI message may be signaled.

In a variant embodiment, the dedicated Colour Volume SEI message may be a new SEI message or an existing SEI message defined in the VSEI specification.

In a variant embodiment, the dedicated Colour Volume SEI message may be a user defined SEI message defined outside of the VSEI specification.

**Figure 7F** illustrates an overview of the syntax elements according to embodiments where both the target colour volume information and the original colour volume information are carried by external means. The corresponding syntax is a combination of the syntax of tables described above related to the target color volume and related to the original color volume. For example, the corresponding syntax may be a combination of the syntax of table 10 and table 15.

The tables inserted above illustrating the syntax elements comprise syntax elements related to adaptation metadata. In at least one embodiment, these metadata may be optional and may be present only when signaled by a specific syntax element (E.g., nnpfc _tm_adaptation_information_present_flag). In another embodiment, adaptation metadata are never used. In such embodiment, there is no need to convey any syntax element related to adaptation metadata and such syntax elements may be removed from the tables above.

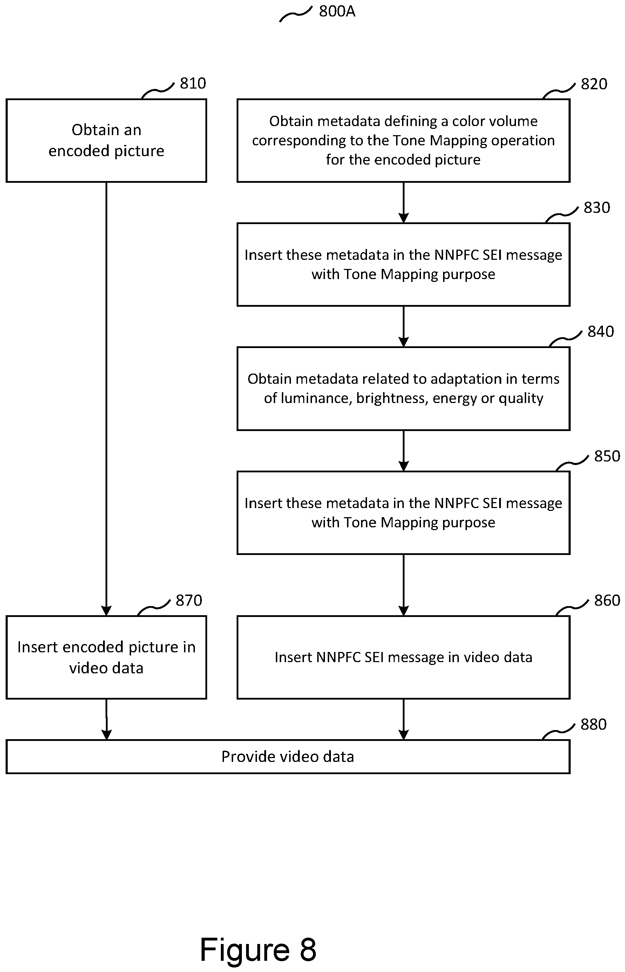

**Figure 8** illustrates an example process for encoding video data comprising an NNPFC SEI message with Tone Mapping purpose, target color volume information and adaptation information according to embodiments. The process 800 is for example implemented by a processor 1010 of a device 1000 of figure 1, a system 210 of figure 2, or an encoder 300 of figure 3. In step 810, the processor obtains a picture to be encoded and encodes it, for example as described with reference to figure 3, to obtain an encoded picture. In step 820, the processor obtains metadata describing one or more colour volumes corresponding to the resulting picture after a Tone Mapping operation is applied. In step 830, the processor inserts these metadata in the NNPFC SEI message, for example according to the syntax of any of tables 4 to 12 and a Tone Mapping purpose is indicated, for example according to the syntax of table 3. In step 840, optionally, the processor obtains metadata related to the adaptation in terms of luminance, and/or brightness and/or energy and/or quality. In step 850, the processor inserts these metadata in the NNPFC SEI message, for example according to the syntax of any of tables 4 to 12. In step 860, the NNPFC SEI message is inserted in the video data. It may also comprise the optional adaptation metadata. In step 870, the encoded picture is inserted in the video data. Steps 860 and 870 can also be understood as a single step for generating video data comprising the encoded picture and the NNPFC SEI message. In step 880, the processor provides the video data, for example to a decoder, as a bitstream or a file. In this example processes, the order of the above steps may be changed, for example by determining or obtaining first all the metadata and then inserting them altogether in the bitstream.

This process corresponds to the embodiments where the target colour volume information is carried directly in the NNPFC SEI message. When the target colour volume information is carried by external means (e.g., another SEI message) and identified by an identifier, the process further comprises an additional step for generating a separate SEI message adapted to carry the target color volume and for inserting the identifier of the target colour volume and the information related to the target colour volume into this second SEI message.

In at least one embodiment, the encoding process further comprises encoding information representative of the original color volume. Such information may be carried similarly as the target color volume, i.e., either carried directly in the NNPFC SEI message or carried directly in a second SEI message adapted to carry color volume. The process is similar than for information related to the target color volume.

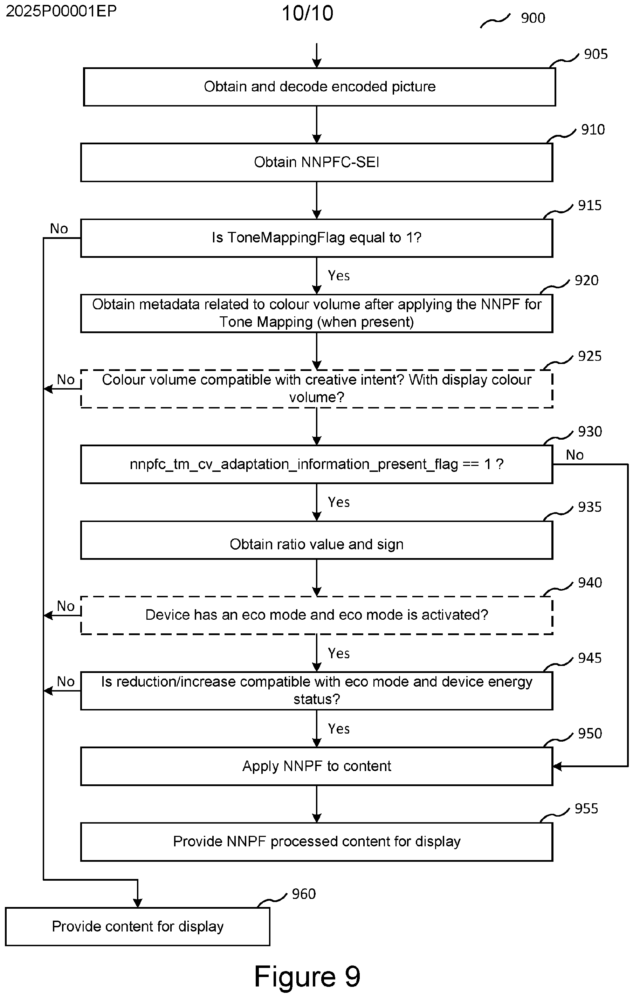

**Figure 9** illustrates an example process for decoding video data comprising an NNPFC SEI message with Tone Mapping purpose and target color volume according to embodiments. The process 900 is for example implemented by a device 1000 of figure 1, a system 230 of figure 2, or a decoder 400 of figure 4.

In step 905, the processor obtains an encoded picture from video data (e.g., a bitstream or a file) and decodes it, for example as described with reference to figure 4, to obtain a decoded picture. In step 910, the processor obtains a NNPFC SEI message from video data. In step 915, the processor checks whether the purpose of the NNPFC SEI message is a tone mapping operation, which is done by checking that the ToneMappingFlag is true or not. If the ToneMappingFlag is false, the processor jumps to step 960. If the ToneMappingFlag is true, the processor jumps to step 920. In step 960, the processor provides the unmodified content for being displayed or to another post-processor, e.g., for another purpose of the NNPFC SEI message. In step 920, the processor obtains metadata related to the colour volume that corresponds to the picture after the application of the Tone Mapping operation. Optionally, in step 925, the processor further checks that these metadata are in accordance with a criterion such as the intended creative intent, or the built-in display colour volume. If the metadata do not satisfy the criterion, the processor jumps to step 960. If the metadata satisfy the criterion, the processor jumps to step 930. In step 930, the processor checks whether adaptation metadata are present. This is done by testing if the nnpfc_tm_cv_adaptation_information_present_flag is set to 1. If not, then the processor jumps to step 950 so that the NNPF for Tone Mapping purpose can applied on the content without the use of the adaptation metadata. If yes, the processor jumps to step 935 and obtains different ratios and signs metadata related to the adaptation. Optionally, in step 940, the processor checks whether the device has a mode a mode indicating an economic use of energy (i.e., an 'eco' mode) and whether this mode is activated. If it is the case, the processor jumps to step 945 and if it is not true, it jumps to step 960. Based on the adaptation metadata, in step 945, the processor checks whether the adaptation (i.e., either a reduction or an increase in terms of for example the luminance or the energy) corresponds to the energy status of the device (for example, the adaptation corresponds to an increase in terms of energy or luminance and an extra energy level is available). If the adaptation corresponding to the Tone Mapping operation is compatible with the device energy status, the processor jumps to step 950 and the tone mapping NNPF is applied on the content with the parameters obtained from the video data and while performing the adaptation. In the other case, the processor jumps to step 960. After step 950, the tone-mapped content is provided, in step 955.

This process corresponds to the embodiments where the target colour volume information is indicated directly in the NNPFC SEI message. When the target colour volume information is indicated in external means (e.g., another SEI message) and identified by an identifier, the step 920 further comprises obtaining the identifier of the target colour volume and from this identifier, identifying the SEI message that contains the information related to the target colour volume. In case the SEI message cannot be found, the NNPF may not be applied.

In at least one embodiment, the decoding process further comprises obtaining information representative of the original color volume. Such information may be carried similarly as the target color volume, i.e., either carried directly in the NNPFC SEI message or carried directly in a second SEI message adapted to carry color volume. The process is similar than for information related to the target color volume. This information in addition to the target colour volume may be used to decide whether to performing the tone mapping operation for example depending on a reduced or increased target colour volume compared to the original colour volume.

In a variant embodiment, additional steps are performed to check whether the required display model corresponds to the one of the display. Similarly, it can be checked that the expected quality after application of the NNPF is higher than the quality threshold set in e.g., the user profile or the system requirements.

Any other order of the steps of process 900 fulfilling the same function may be used. For example, testing that the device has an eco mode that is activated (step 940) may be among the first operations of the process.

Although some parts of the description refer to video, the embodiments are not restricted to conventional (2D) videos and apply to any type of visual media content such as static images, stereoscopic (3D) images or videos, 360° immersive images or video, point clouds, based on the same principles as described above.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application can be implemented in many different forms. Figures provide some embodiments, but other embodiments are contemplated, and the discussion of these figures does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined.

Various numeric values are used in the present application, for example, 128 for the block size. The specific values are for example purposes and the aspects described are not limited to these specific values.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, adapting the illumination compensation process.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, tablets, smartphones, cell phones, portable/personal digital assistants, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

In the present application, the terms "reconstructed" and "decoded" may be used interchangeably, the terms "pixel" and "sample" may be used interchangeably, the terms "image," "picture", "frame", "slice" and "tiles" may be used interchangeably. Usually, but not necessarily, the term "reconstructed" is used at the encoder side while "decoded" is used at the decoder side.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of an illumination compensation parameter. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

**Claims**

1. A method comprising:

    obtaining an encoded picture;
    obtaining a color volume corresponding to a result of a tone mapping operation for the encoded picture;
    inserting information representative of the colour volume and tone mapping operation in a neural-network post-filter characteristics supplemental enhancement information message;
    generating video data comprising the encoded picture and the neural-network post-filter characteristics supplemental enhancement information message; and
    providing the video data.

2. A method comprising:

    obtaining an encoded picture;
    obtaining a color volume corresponding to a result of a tone mapping operation for the encoded picture;
    inserting information representative of the tone mapping operation in a neural-network post-filter characteristics supplemental enhancement information message;
    inserting information representative of the color volume in a second supplemental enhancement information message designed to carry color volume information;
    generating video data comprising the encoded picture, the neural-network post-filter characteristics supplemental enhancement information message and the second supplemental enhancement information message; and
    providing the video data.

3. The method of any of claims 1 or 2, further comprising:

obtaining a second color volume corresponding to the original picture; and
inserting information representative of the second color volume in the first, the second or a third supplemental enhancement information message designed to carry color volume information;

4. The method of any of claims 1 or 2, further comprising:

obtaining adaptation metadata for the result of the tone mapping operation; and
inserting information representative of the adaptation metadata in the neural-network post-filter characteristics supplemental enhancement information message;

5. The method of claim 4, wherein the adaptation metadata are related to luminance, brightness, energy or quality.

6. A method comprising:

obtaining, from video data, an encoded picture, and neural-network post-filter characteristics supplemental enhancement information message comprising information representative of a colour volume corresponding to a result of a tone mapping operation for the encoded picture and information indicative of a tone mapping operation;
decoding the encoded picture to obtain a decoded picture;
applying a neural-network post-filter tone mapping operation to the decoded picture based on the color volume; and
providing the tone-mapped picture.

7. A method comprising:

obtaining, from video data, an encoded picture, a neural-network post-filter characteristics supplemental enhancement information message comprising information indicative of a tone mapping operation and a second supplemental enhancement information message comprising information representative of a colour volume corresponding to a result of the tone mapping operation for the encoded picture; decoding the encoded picture to obtain a decoded picture;
applying a neural-network post-filter tone mapping operation to the decoded picture based on the color volume; and
providing the tone-mapped picture.

8. The method of any of claims 6 or 7, further comprising obtain adaptation metadata for the result of the tone mapping operation from a second supplemental enhancement information message designed to carry color volume information.

9. The method of any of claims 6 or 7, further comprising obtain adaptation metadata for the result of the tone mapping operation from the neural-network post-filter characteristics supplemental enhancement information message.

10. The method of any of claims 8 to 10, further comprising performing applying the neural network post filter tone mapping operation based on the adaptation metadata.

11. The method of any of claims 8 to 10, further comprising performing applying the neural network post filter tone mapping operation when the adaptation metadata satisfy a criterion.

12. An apparatus comprising one or more processors configured to:

obtain, from video data, an encoded picture, and neural-network post-filter characteristics supplemental enhancement information message comprising information representative of a colour volume corresponding to a result of a tone mapping operation for the encoded picture and information indicative of a tone mapping operation;
decode the encoded picture to obtain a decoded picture;
apply a neural-network post-filter tone mapping operation to the decoded picture based on the color volume; and
provide the tone-mapped picture.

13. An apparatus comprising one or more processors configured to:

obtain, from video data, an encoded picture, a neural-network post-filter characteristics supplemental enhancement information message comprising information indicative of a tone mapping operation and a second supplemental enhancement information message comprising information representative of a colour volume corresponding to a result of the tone mapping operation for the encoded picture;

decode the encoded picture to obtain a decoded picture;

apply a neural-network post-filter tone mapping operation to the decoded picture based on the color volume; and

provide the tone-mapped picture.

14. A non-transitory computer readable medium containing data content generated according to the method of any one of claims 1 to 11.

15. A computer program product comprising instructions for performing the method of any one of claims 1 to 11 when executed by one of more processors.

1000

Figure 1

200

Figure 2

Figure 3

400

Figure 4

Figure 5

Figure 6

NNPCF SEI

nnpfc_purpose

If (nnpfc_purpose is Tone Mapping)

target colour volume

adaptation metadata

# Figure 7A

NNPCF SEI

nnpfc_purpose

If (nnpfc_purpose is Tone Mapping)

nnpfc_tm_target_colour_volume_id

adaptation metadata

TCVI SEI

target_colour_volume_id

# Figure 7B

NNPCF SEI

nnpfc_purpose

If (nnpfc_purpose is Tone Mapping)

target colour volume

original colour volume

adaptation metadata

## Figure 7C

NNPCF SEI

nnpfc_purpose

If (nnpfc_purpose is Tone Mapping)

nnpfc_tm_target_colour_volume_id

original colour volume

adaptation metadata

TCVI SEI
target_colour_volume_id

## Figure 7D

NNPCF SEI

nnpfc_purpose

If (nnpfc_purpose is Tone Mapping)

target colour volume

nnpfc_tm_original_colour_volume_id

adaptation metadata

CCVI SEI

original_colour_volume_id

## Figure 7E

NNPCF SEI

nnpfc_purpose

If (nnpfc_purpose is Tone Mapping)

nnpfc_tm_target_colour_volume_id

nnpfc_tm_original_colour_volume_id

adaptation metadata

TCVI SEI

colour_volume_id1

CCVI SEI

colour_volume_id2

## Figure 7F

~ 800A

~ 810

Obtain an
encoded picture

~ 820

Obtain metadata defining a color volume
corresponding to the Tone Mapping operation
for the encoded picture

~ 830

Insert these metadata in the NNPFC SEI message
with Tone Mapping purpose

~ 840

Obtain metadata related to adaptation in terms
of luminance, brightness, energy or quality

~ 850

Insert these metadata in the NNPFC SEI message
with Tone Mapping purpose

~ 870

Insert encoded picture in
video data

~ 860

Insert NNPFC SEI message in video data

~ 880

Provide video data

# Figure 8

~ 900

~ 905

Obtain and decode encoded picture

~ 910

Obtain NNPFC-SEI

~ 915

No ← Is ToneMappingFlag equal to 1?

Yes

~ 920

Obtain metadata related to colour volume after applying the NNPF for Tone Mapping (when present)

~ 925

No ← Colour volume compatible with creative intent? With display colour volume?

~ 930

nnpfc_tm_cv_adaptation_information_present_flag == 1 ?          No →

Yes

~ 935

Obtain ratio value and sign

~ 940

No ← Device has an eco mode and eco mode is activated?

Yes

~ 945

No ← Is reduction/increase compatible with eco mode and device energy status?

Yes

~ 950

Apply NNPF to content

~ 955

Provide NNPF processed content for display

~ 960

Provide content for display

## Figure 9

# EUROPEAN SEARCH REPORT

**Application Number**

EP 25 30 5012

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | C-H DEMARTY (INTERDIGITAL) ET AL: "AHG9: On NNPF for brightness adaptation", 36. JVET MEETING; 20241101 - 20241108; KEMER; (THE JOINT VIDEO EXPLORATION TEAM OF ISO/IEC JTC1/SC29/WG11 AND ITU-T SG.16), , no. JVET-AJ0147 23 October 2024 (2024-10-23), XP030326014, Retrieved from the Internet: URL:https://jvet-experts.org/doc_end_user/documents/36_Kemer/wg11/JVET-AJ0147-v1.zip JVET-AJ0147-v1.docx [retrieved on 2024-10-23] | 1,4-6, 8-12,14, 15 | INV. H04N19/46 H04N19/70 H04N19/85 |
| Y | * figure 1 * * abstract * * sections 1 and 3 * ----- | 2,3,7,13 | |
| Y | "Information technology - High efficiency coding and media delivery in heterogeneous environments - Part 15: Signalling, backward compatibility and display adaptation for HDR/WCG video", ISO/IEC TR 23008-15:2018, IEC, 3, RUE DE VAREMBÉ, PO BOX 131, CH-1211 GENEVA 20, SWITZERLAND , 7 August 2018 (2018-08-07), pages 1-44, XP082064880, Retrieved from the Internet: URL:https://api.iec.ch/harmonized/publications/download/282057 [retrieved on 2018-08-07] * sections 7.3.2 and 10.1 * ----- | 2,3,7,13 | **TECHNICAL FIELDS SEARCHED (IPC)**<br><br>H04N |

The present search report has been drawn up for all claims

| Place of search | Date of completion of the search | Examiner |
|---|---|---|
| Munich | 11 June 2025 | Regidor Arenales, R |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.................................................................................................
& : member of the same patent family, corresponding
   document

EPO FORM 1503 03.82 (P4C01)